# EUROPÄISCHE PATENTSCHRIFT

(11) **EP 3 685 658 B1**
(45) Veröffentlichungstag und Bekanntmachung des Hinweises auf die Patenterteilung: **30.03.2022**
(21) Anmeldenummer: 20152374.3
(22) Anmeldetag: 17.01.2020
(51) Int. Cl.: A01G 23/04

(54) **WURZELBALLEN-UNTERSCHNEIDE- UND AUSHEBEGERÄT**
DEVICE FOR CUTTING UNDER AND REMOVING ROOT BALES
APPAREIL D'ARRACHAGE ET DE COUPE DE LA MOTTE

(30) Priorität: 22.01.2019 DE 202019100334 U; 27.09.2019 DE 102019214871
(43) Veröffentlichungstag der Anmeldung: 29.07.2020
(73) Patentinhaber: Elsen, Freddy, 25421 Pinneberg (DE)
(72) Erfinder: Elsen, Freddy, 25421 Pinneberg (DE)
(74) Vertreter: Müller Verweyen

(56) Entgegenhaltungen:
- WO-A1-2019/034600
- DE-B3-102016 225 917
- JP-A- H11 206 250
- JP-A- S61 166 334
- JP-U- S5 944 253

## Beschreibung

Die vorliegende Erfindung betrifft ein Wurzelballen-Unterschneide- und Aushebegerät für einen autarken Einsatz und/oder zum Anbau an ein Trägerfahrzeug zum Unterschneiden und Ausheben von Pflanzen mit Wurzelballen mit zwei Unterschneidemessern, die auf einer Kreisbahn um eine vertikale Achse rotierbar gelagert sind.

Bei bekannten Wurzelballen-Unterschneide- und Aushebegeräten, auch Ballenschneider genannt, sind die Unterschneidemesser stets so dimensioniert, dass die maximale Leistungsfähigkeit des Gerätes ausgenutzt werden kann. Diese Geräte sind entsprechend groß und schwer, was wiederum ein großes Trägerfahrzeug erfordert. Aufgrund der Baugröße müssen zwischen den Bäumen, Koniferen oder Sträuchern große Abstände berücksichtigt werden, was zu einem größeren Flächenbedarf führt, der betriebswirtschaftlich nachteilig ist. Auch ein Bereithalten von Geräten unterschiedlicher Baugröße bedeutet stets einen erheblichen Kosten- und/oder Umrüstaufwand.

Die US-Patentschrift US 3 017 707 offenbart ein Einzelballen-Aushebegerät zum Anbau an ein Trägerfahrzeug, das sechs gleichmäßig beabstandete Unterschneidemesser umfasst, die an einem geschlossenen, ringförmigen Trägerrahmen gelagert sind. Der Antrieb des Einzelballen-Aushebegerät erfolgt dort ausschließlich über mechanische Übertragungselemente durch das Trägerfahrzeug. Das Gerät ist antriebsseitig sehr aufwendig und störanfällig sowie kompliziert in der Handhabung. Zudem ist das Gerät aufgrund des geschlossenen Trägerrahmens und der großen Anzahl an Unterschneidemessern sehr schwer.

Aus der US-Patentschrift US 5 081 941 ist ein Ballenstecher bekannt, welcher auch als Spatenmaschine bezeichnet wird. Die dort offenbarte Spatenmaschine umfasst vier an Linearführungen angeordnete Spaten, welche unter einem Winkel in das Erdreich einstechen. Für unterschiedliche Ballengrößen sind dort austauschbare Spatenblätter vorgesehen, dies bedeutet, dass stets vier schwere Spatenblätter erforderlich sind und ggf. auszutauschen sind. Ein rotieren der Spatenblätter um eine vertikale Achse ist dort nicht vorgesehen. Die Spatenblätter sind zudem zur Verwendung als rotierbare Unterschneidemesser ungeeignet, da vertikale T-förmige Verstärkungsprofile auf der Rückseite den Widerstand im Erdreich erheblich vergrößern und keinen sauberen Schnitt erzeugen.

Die europäische Patentschrift EP 0 022 733 B1 beschreibt ein Wurzelballen-Unterschneide- und Aushebegerät, welches lediglich ein einziges Unterschneidewerkzeug aufweist, das rotierbar an einem einstückigen, massiven kreisringsegmentförmigen Träger gelagert ist. Das dort offenbarte Wurzelballen-Unterschneide- und Aushebegerät erfordert ein zusätzliches Aushebewerkzeug, da das Unterschneidewerkzeug allein ungeeignet zum Ausheben eines Wurzelballens ist. Aufgrund der am Trägerfahrzeug seitlichen Anordnung des Geräts sind der benötigte Abstand zwischen den Pflanzen und damit der Flächenbedarf sehr groß. Ein Einsatz des Wurzelballen-Unterschneide- und Aushebegeräts in Baumschulen mit geringen Pflanzabständen scheidet somit aus.

Die deutsche Offenlegungsschrift DE 10 2017 214 290 A1 zeigt gegenüber den vorgenannten Ballenschneidern einen verbesserten, schmaleren und leichteren Ballenschneider mit einem Paar - um eine senkrechte Achse - rotierbaren Unterschneidemessern, welcher vorteilhaft bei geringen Pflanzabständen in Verbindung mit einem schmalen Trägerfahrzeug einsetzbar ist, der jedoch relativ teuer in der Herstellung ist. Ein anderes gattungsgemäßes Wurzelballen-Unterschneide- und Aushebegerät ist aus JP S61 166334 A bekannt.

Ausgehend von diesem Stand der Technik ist es Aufgabe der vorliegenden Erfindung, ein Wurzelballen-Unterschneide- und Aushebegerät leichter und kompakter Bauart bereitzustellen, das universell für unterschiedlich große und unterschiedlich geformte Wurzelballen einsetzbar und dabei einfach auf eine abweichende Ballengröße und/oder Ballenform einstellbar ist, wobei für einen insbesondere autarken Betrieb sämtliche motorischen Antriebsmittel am Wurzelballen-Unterschneide- und Aushebegerät selbst angeordnet sind und sich durch einen geringen Leistungsbedarf auszeichnen.

Die Aufgabe wird gemäß der vorliegenden Erfindung gelöst durch ein Wurzelballen-Unterschneide- und Aushebegerät gemäß Anspruch 1, nämlich ein Wurzelballen-Unterschneide- und Aushebegerät mit einer Bogenführung, die ein bogenförmiges Führungslager und einen, mittels eines an der Bogenführung gehalterten Motors um eine Drehachse A rotierbaren, bogenförmigen Messerträger umfasst, an dem zwei Messerführungen, bevorzugt diametral entgegengesetzt gehaltert sind, in denen jeweils ein in seiner Längserstreckung bogenförmiges Unterschneidemesser bewegbar gelagert ist, wobei das bogenförmige Führungslager und der bogenförmige Messerträger sich jeweils über einen Bogenwinkel im Bereich von 210° bis maximal 340° erstrecken und somit eine daraus resultierende Öffnung am Umfang im Bereich von 150° bis 20° aufweisen, und wobei der bogenförmige Messerträger seitlich an dem bogenförmigen Führungslager bewegbar in Nutrollen gelagert ist, und dass der bogenförmigen Messerträger mindestens ein bogenförmiges Antriebselement und wenigsten ein bogenförmiges Führungsprofil mit einer, zum bogenförmigen Führungslager weisenden, konvexen Lauffläche umfasst, wobei das bogenförmige Führungsprofil derart mit den Nutrollen in Eingriff bringbar ist, dass der bogenförmige Messerträger um die im Wesentlichen vertikalen Drehachse A derart rotierbar ist, dass die Öffnung am Umfang des bogenförmigen Führungslagers durch den bogenförmigen Messerträger verschließbar ist.

Die Nutrollen weisen eine am Umfang eine konkave, v- oder trapezförmige Nut oder eine Kombination dieser Nutformen auf.

Das bogenförmige Führungslager bildet somit ein Lagerkranzsegment von 210 bis 340 Winkelgrad, vorzugsweise von 270 bis 300 Winkelgrad und der bogenförmigen Messerträger bildet quasi das zugehörige Drehkranzsegment von 210 bis 340 Winkelgrad, vorzugsweise von 270 bis 300 Winkelgrad, wobei der bogenförmigen Messerträger bzw. das Drehkranzsegment seitlich vorzugsweise innenseitig des Führungslagers bzw. des Lagerkranzsegments - bezogen auf die Drehachse A - gelagert sein kann. Die Drehachse A ist während des bestimmungsgemäßen Gebrauchs des Wurzelballen-Unterschneide- und Aushebegeräts im Wesentlichen senkrecht zur Geländeoberfläche ausgerichtet.

Das erfindungsgemäße Wurzelballen-Unterschneide- und Aushebegerät weist somit erstmalig eine Summe von vorteilhaften, insbesondere handhabungstechnischen Vorteilen bzw. Merkmalen auf. Zunächst bietet der am Umfang offene bogenförmige Messerträger bei einer fortlaufenden mehrfachen Umdrehung in dem, am Umfang offenen bogenförmigen, Führungslager, die Möglichkeit kontinuierlich, unterbrechungsfrei mit den bogenförmigen Unterschneidemessern in das Erdreich einzudringen. In Verbindung mit einem Stellantrieb ist ein sukzessives Absenken der bogenförmigen Unterschneidemesser möglich und damit ein bestimmbares und die Bodenverhältnisse berücksichtigendes Drehmoment sowohl des Messerträgerantriebs als auch des Stellantriebs erzielbar. Weiterhin ist gegenüber einem zentral angetriebenen Wurzelballen-Unterschneide- und/oder Aushebegerät der große Vorteil verbunden, dass der Raum oberhalb der Unterschneidemesser für die Pflanze frei ist bzw. nicht durch Antriebsmittel verbaut ist. Aufgrund der kreisbogenförmigen Bauart, insbesondere der bogenförmigen Außenkontur ist während des Betriebs eine schonende Behandlung benachbarter Pflanzen sichergestellt und eine Beschädigung benachbarter Pflanzen bei sachgerechter Bedienung ausgeschlossen.

In einer besonders bevorzugten Weiterbildung umfasst das bogenförmige Führungslager eine Mehrzahl von satzweise, insbesondere paarweise übereinander angeordneten Nutrollen aufweisen und der bogenförmigen Messerträger wenigsten zwei übereinander angeordnete bogenförmige Führungsprofile umfasst, die eine konvexe Lauffläche am Umfang aufweisen, wobei das obere Führungsprofil mit den oberen Nutrollen und das untere Führungsprofil mit den unteren Nutrollen in Eingriff bringbar ist.

In einer ersten Ausbildung der Führungsprofile weisen das obere Führungsprofil und das untere Führungsprofil den gleichen Querschnitt bzw. Durchmesser auf. In einer zweiten Ausbildung der Führungsprofile weisen das obere Führungsprofil und das untere Führungsprofil verschiedene Querschnitte bzw. Durchmesser auf, vorzugsweise ist das obere Führungsprofil im Querschnitt bzw. im Durchmesser größer als das untere Führungsprofil. Dies ist besonders zweckmäßig, weil die daran gehalterten Messerführungen vorteilhaft geneigt sein können. Besonders kostengünstigen sind die Führungsprofile aus einem Rohr, Winkelprofil, Rundmaterial oder Halbrundmaterial vorzugsweise aus Stahl hergestellt, wobei eine Ausbildung aus, insbesondere einem runden Stahlrohr zudem eine erhebliche Kosten- und Gewichtsersparnis mit sich bringt. Die Führungsprofile können auch aus Aluminium, Kunststoff oder einen Verbundwerkstoff hergestellt sein, sofern eine geforderte Verschleißfestigkeit und Tragfähigkeit sichergestellt sind.

In einer besonders zweckmäßigen Ausbildung des bogenförmigen Führungslagers sind die Nutrollen quer zu ihrer Drehachse radial bewegbar, insbesondere federnd in dem bogenförmigen Führungslager in einem Rollenlager und/oder einer Rollenkassette zwischen einer kreisringsegmentförmigen Deckplatte und einer kreisringsegmentförmigen Bodenplatte gelagert. Die jeweils übereinander angeordneten oberen und unteren Nutrollen sind zweckmäßigerweise auf einer gemeinsamen vertikalen Achse in dem bogenförmigen Führungslager gelagert. Die übereinander angeordneten oberen und unteren Nutrollen können sowohl gleiche als auch verschiedene Durchmesser und Nutformen aufweisen, letzteres ist besonders vorteilhaft, wenn die oberen und unteren Führungsprofile verschiedene wirksame Durchmesser aufweisen. In einer weiteren Ausgestaltung sind die oberen und unteren Nutrollen als kompakte, einstückige Rotationskörper ausgebildet. Durch den mehrteiligen Aufbau des Führungslagers, nämlich mit einer oberen kreisringsegmentförmigen Deckplatte und einer unteren kreisringsegmentförmigen Bodenplatte, die durch Distanzelemente miteinander lösbar verbunden sind, wird eine leichte und wartungsfreundliche Bauart geschaffen.

In einer vorteilhaften Ausgestaltung des Antriebssystems des Wurzelballen-Unterschneide- und Aushebegeräts, sind der Motor und eine Getriebeanordnung zum Antreiben des Messerträgers an der Bogenführung gehaltert, wobei die Getriebeanordnung wenigstens zwei Zahnräder aufweist, die in einer horizontalen Ebene achsparallel zu den Nutrollen in dem bogenförmigen Führungslager derart beabstandet gelagert sind, dass das, an dem Messerträger angeordnet, bogenförmige Antriebselement stets mit mindestens einem der Zahnräder in Eingriff ist. Das bogenförmige Antriebselement kann als bogenförmige Zahnstange, als bogenförmige Schiene mit rechteckförmigen Durchbrüchen, als ein einstückiges Zahnkranzsegment oder als eine Mehrzahl von zusammengesetzten Zahnkranzsegmenten ausgebildet sein, wobei das bogenförmige Antriebselement bevorzugt zwischen dem oberen Führungsprofil und dem unteren Führungsprofil oder oberhalb des oberen und/oder unterhalb des unteren Führungsprofils angeordnet und mit diesen verbunden sein kann.

In einer ersten bevorzugten Weiterbildung des Antriebssystems kann der Motor mit einem kompakten Untersetzungsgetriebe verbunden sein oder als Getriebemotor ausgebildet sein. Weiterhin umfasst die Getriebeanordnung ein abtriebsseitig des Untersetzungsgetriebes gelagertes Zahnrad, das eine Rollenkette treibt, welche wiederum zwei weitere Zahnräder antreibt, die in einer horizontalen Ebene oberhalb des bogenförmigen Führungslagers in einem Getriebekasten gelagert sind, wobei die zwei weiteren Zahnräder jeweils durch eine Gelenkwelle mit einem der Zahnräder in dem bogenförmigen Führungslager verbunden sind. Die vorstehend beschriebene "hochgesetzte" Motor-Getriebe-Kombination nebst Getriebekasten weist einen ausreichenden Abstand zur Bodenoberfläche auf, sodass auch bei ungünstigen Wetter- und Bodenverhältnissen ein Verschmutzen von Getriebeelementen ausgeschlossen ist.

In einer zweiten bevorzugten Weiterbildung des Antriebssystems sind zwei Motoren vorgesehen, in Form von sogenannte Direktantrieben, Torquemotoren, Getriebemotoren oder elektrohydraulischen Motoren derart beabstandet direkt auf oder in dem bogenförmigen Führungslager angeordnet sind, dass der erste Motor mit dem ersten Zahnrad und der zweite Motor mit dem zweiten Zahnrad in dem bogenförmigen Führungslager über jeweils eine Kupplung verbunden sind. Diese vorstehend beschriebene "integrierte" Motor-Getriebe-Kombination benötigt ein Minimum an Getriebeelementen und somit an Verschleißteilen. Durch eine entsprechende Kapselung ist sichergestellt, dass auch bei ungünstigen Wetter- und Bodenverhältnissen ein Verschmutzen von Getriebeelementen ausgeschlossen ist.

In einer besonders zweckmäßigen Weiterbildung der Erfindung umfassen die Messerführungen jeweils eine Adaptereinheit und ein Messerlager für ein bogenförmiges Unterschneidemesser. Das Messerlager ist von oben einsetzbar und lösbar in der Adaptereinheit gelagert und am bogenförmigen Messerträger radial nach innen zur Drehachse A gerichtet angeordnet. Die Adaptereinheit umfasst seitlich angeordnete Wangen und zumindest ein Halteelement, das an dem bogenförmigen Messerträger befestigt ist. Die Wangen weisen, zum Aufnehmen der Messerlager, auf ihren einander zugewandten Seiten jeweils wenigstens eine noch oben gerichtete, offene Nut auf. Das oder jedes Messerlager umfasst zwei beabstandete Wangen, die an ihren nach außen gerichteten Seiten jeweils einen Steg aufweisen, der in eine Nut einer Wange von oben einführbar ist. Die Lagerplatten sind durch eine Rückwand und/oder Distanzelemente miteinander verbunden sind, wobei zumindest zwei Distanzelemente als Rollenachsen zur Aufnahme von Führungsrollen und/oder einem Antriebsritzel ausgebildet sein können. Hierdurch ist es auf einfache, insbesondere werkzeugfreie Weise möglich, durch verschiedene parallele Nuten in den Wangen, das Messerlager nebst bogenförmigen Unterschneidemesser entlang einer horizontalen Linearachse X zu positionieren, wodurch der radiale Abstand des Messerlagers zum Messerträger und damit der wirksame Durchmesser der umlaufenden Unterschneidemesser veränderbar ist. Hierdurch ist es auch auf einfache, insbesondere werkzeugfreie Weise gelungen durch verschiedene Winkel der Nuten in den Wangen der Messerlager nebst bogenförmigen Unterschneidemessern in verschiedenen Winkeln in der Adaptereinheit zu positionieren, wodurch der Winkel der Messerlager zur Drehachse A änderbar ist. Durch eine geeignete Wahl der Wangen- und/der Lagerplattenpaarungen - die speziell auf die verschiedenen Ballengrößen und/oder Ballenformen der unterschiedlichen Gehölze angepasst sind - kann das Wurzelballen-Unterschneide- und Aushebegerät einfach, schnell und gezielt auf andere Ballengrößen und/oder Ballenformen umgerüstet werden.

Eine besonders zweckmäßige Ausführungsform des Wurzelballen-Unterschneide- und Aushebegeräts gemäß der Erfindung ist dadurch gekennzeichnet, dass wenigstens eine Führungsrolle konvex ballig ausgebildet ist und eine Führungsrolle konkav ausgebildet ist, wobei die ballige Führungsrolle und die konvexe Führungsrolle ausgebildet und eingerichtet sind, ein bogenförmiges Unterschneidemesser, das auch in seiner Quererstreckung, d.h. zwischen den Schneidkanten bogenförmig ausgebildet ist, zwischen sich aufzunehmen und durch Reibschluss optimal zu führen. Hiermit ist erfindungsgemäß verbunden, dass die in ihrer Längserstreckung bogenförmigen Unterschneidemesser in ihrer Quererstreckung ebenfalls bogenförmig ausgebildet sind und eine Krümmung aufweisen, die mit einer Krümmung des Krümmung der bogenförmigen Unterschneidemesser in Querrichtung der Krümmung eines Kreisbogens eines zu unterschneidenden Ballens, wodurch der Widerstand im Erdreich erheblich reduziert wird oder ist. Die Krümmung der bogenförmigen Unterschneidemesser in Querrichtung wird auch als Pallung oder Schüsselung bezeichnet, die die Steifigkeit der in Längsrichtung bogenförmigen Unterschneidemesser wesentlich erhöht. In einer besonders bevorzugten Ausgestaltung können die bogenförmigen Unterschneidemesser einen sichelförmigen Querschnitt mit zwei seitlichen gegenüberliegenden spitz zulaufenden Schneidkanten aufweisen.

Zweckmäßigerweise ist an dem Messerträger - benachbart zu jeder Messerführung oder an der Messerführung selbst - ein Stellantrieb, insbesondere elektrischer Stellantrieb in Verbindung mit dem Antriebsritzel, zum Bewegen und Positionieren des bogenförmigen Unterschneidemessers entlang einer Führungsbahn Y, Y' angeordnet, wobei die Führungsbahn Y, Y' in einem spitzen Winkel zur Drehachse A verläuft. Korrespondierend zur Ausbildung des Antriebsritzels weist jedes Unterschneidemesser ein Antriebselement, in Form eine Mehrzahl von gleichmäßig beabstandeten Durchbrüchen, Vertiefungen oder Erhebungen zum Herstellen einer Wirkverbindung mit dem Antriebsritzel und somit mit dem Stellantrieb auf. Der elektrische Stellantrieb umfasst vorteilhafterweise einen Elektromotor, insbesondere einen Torquemotor oder Getriebemotor. Der elektrische Stellantrieb kann auch als Elektrozylinder oder als elektrohydraulischer Antrieb ausgebildet sein. Der elektrische Stellantrieb wird durch eine Steuereinrichtung angesteuert und durch eine Batterieeinheit mit Energie versorgt womit der elektrische Stellantrieb bzw. die elektrischen Stellantriebe wiederum unabhängig von externer Energie sind. In dieser Ausgestaltung sind die elektrischer Stellantriebe vorteilhaft an dem, auf einer Kreisbahn bewegbaren, Messerträger angeordnet. Mit anderen Worten laufen die elektrischen Stellantriebe mit um, wobei die elektrische Energie über Schleifringe zuführbar ist.

Um die Störsicherheit zu verbessern und die Kosten zu senken, ist in einer vorteilhaften Weiterbildung vorgesehen, die elektrischen Antriebe vom rotierbaren Messerträger auf das stationäre Führungslager zu verlagern.

Hierfür ist in vorteilhafter Weise an dem bogenförmigen Führungslagers wenigsten eine Antriebsvorrichtung angeordnet, die eine in einer bogenförmigen Kettenführung geführte Rollenkette und ein eingangsseitiges Getriebe und/oder einen eingangsseitigen, insbesondere direkt gekoppelten Motor umfasst. Der Antriebsvorrichtung nachgeordnet ist am Messerträger an jeder Messrführung ein mechanischer Stellantrieb xum Bewegen und Positionieren des bogenförmigen Unterschneidemessers entlang der Führungsbahn Y, Y' angeordnet, wobei die Führungsbahn Y, Y' in einem spitzen Winkel zur Drehachse A verläuft. Zum Fixieren des Messerträgers in einer vorbestimmten Position ist wenigstens ein Bremselement am bogenförmigen Führungslagers angeordnet.

Der Stellantrieb umfasst in einer Ausbildung ein Kettenritzel und ein mit dem Kettenritzel wirkverbundenes Schneckengetriebe, welches eine Schneckenwelle und ein Schneckenrad aufweist, wobei das Schneckenrad vorzugsweise zum Eingriff in gleichmäßig beabstandete Durchbrüche eines Unterschneidemesser ausgebildet und eingerichtet ist oder mittels eines weiteren Zahnrads auf das Unterschneidemesser wirkt. Entsprechend weist jedes Unterschneidemesser vorzugsweise ein Antriebselement zum Herstellen einer Wirkverbindung mit dem Stellantrieb auf, beispielsweise eine Mehrzahl gleichmäßig beabstandeter Durchbrüche, Vertiefungen oder Erhebungen.

Der Stellantrieb umfasst dabei in einer weiteren alternativen Ausbildung ein Kettenritzel und eine mit dem Kettenritzel wirkverbundene Spindel sowie eine Spindelmutter, wobei an der Spindelmutter ein Mitnehmer zum Herstellen einer Wirkverbindung mit einem Unterschneidemesser angeordnet ist. Der Mitnehmer kann dabei u.a. als Bolzen, Stift, Schwert, Zapfen oder Haken ausgebildet sein. Entsprechend weist jedes Unterschneidemesser vorteilhaft ein korrespondierendes Antriebselement zum Herstellen einer Wirkverbindung mit dem Stellantrieb und dem Mitnehmer auf, nämlich eine Bohrung, einen Ausschnitt, ein Rezess oder einen Vorsprung.

Mit den vorstehend beschriebenen rein mechanischen Stellantrieben ist in Verbindung mit den Antriebsvorrichtungen durch die in der bogenförmigen Kettenführung geführte Rollenkette eine elektrische und/oder hydraulische Energiezuführung zum rotierbaren Messerträger verzichtbar.

Zum Unterstützen des Unterschneidevorgangs kann optional am bogenförmigen Führungslager wenigstens eine Vibrationseinrichtung angeordnet sein, hierdurch schneiden die Unterschneidemesser unter leichter Vibration durch das Erdreich.

Der Klarheit halber sei an dieser Stelle darauf hingewiesen, dass die genannten Achsen A, B, B', C, C', X und Y, Y' virtuelle Achsen sind.

Eine besonders bevorzugte Weiterbildung der Erfindung ist dadurch gekennzeichnet, dass zum Einstellen eines vorbestimmten Abstands zur Geländeoberfläche an dem bogenförmigen Führungslager, wenigstens eine, an längenveränderbaren Stützen gehalterte, insbesondere lösbare kreisringsegmentförmige Stützplatte angeordnet ist. Somit ist diese einfach gegen zwei kleinere kreisringsegmentförmige oder tellerförmige Stützplatten auswechselbar, womit eine optimale Anpassung an die jeweiligen Bodenverhältnisse gegeben ist. Die Stützen können als Antrieb jeweils einen Elektrozylinder aufweisen. Mit dem, insbesondere stufenlosen Einstellen des Abstands zur Geländeoberfläche ist in besonders einfacher Weise die Ballengröße variierbar, weil beim Anheben des Geräts das gesamte Schnittprofil um den angehobenen Betrag ebenfalls erhöht wird und die Unterschneidemesser deutlich flacher durch das Erdreich schneiden. Weiterhin wird einer Verschmutzung des bogenförmigen Führungslagers und des Messerträgers durch Herstellung eines vorbestimmten Abstands begegnet. Schließlich wird über die Stützplatte(n) die Gegenkraft beim Ausheben eines Wurzelballens übertragen, sodass das bogenförmige Führungslager und der bogenförmige Messerträger nicht in Kontakt mit dem Erdreich kommen können.

Eine besonders vorteilhafte Weiterbildung der Erfindung ist dadurch gekennzeichnet, dass das Wurzelballen-Unterschneide- und Aushebegerät ein Fahrwerk mit wenigsten zwei elektromotorisch angetriebenen Rädern oder Ketten aufweist. Zudem sind am Rahmen des Wurzelballen-Unterschneide- und Aushebegeräts Handgriffe, elektrische Betätigungselemente und Befehlsgeräte, in Form von Tastern, Schaltern und/oder eines Touchpanels angeordnet. Hiermit ist ein manuelles Bewegen, Steuern und Lenken des Wurzelballen-Unterschneide- und Aushebegeräts besonders vorteilhaft ermöglicht. Weiterhin ist am Rahmen des Wurzelballen-Unterschneide- und Aushebegeräts eine Batterieeinheit zur Energieversorgung der Motoren und/oder Elektrozylindern gehaltert, wobei vorzugsweise eine elektrische Ladeeinrichtung für die Batterieeinheit umfasst ist. Hiermit ist ein autarker Betrieb des Wurzelballen-Unterschneide- und Aushebegeräts sichergestellt. Zudem kann das Wurzelballen-Unterschneide- und Aushebegerät durch den Einsatz von geeigneten z.B. Druck-, Entfernungs- und Positionssensoren (GPS) weitestgehend automatisiert werden und ermöglicht so ein zumindest teilautonomes Arbeiten in einer Baumschule.

Eine alternative Ausbildung des Fahrwerks zeichnet sich dadurch aus, dass das Fahrwerk ein mittig angeordnetes breites walzenförmiges Rad oder eine mittig angeordnete Kette aufweist.

Die besonders kompakte, einfache Bauart mit integriertem Antriebssystem und Energieversorgung ermöglicht eine hohe Beweglichkeit und sehr platzsparende Abmessungen, die einen Einsatz für viele Pflanzenarten und Pflanzengrößen sowie eng stehende Pflanzen erst möglich macht. Ein Einsatz des Wurzelballen-Unterschneide- und Aushebegeräts gemäß der Erfindung ist somit auch in bestehenden Pflanzkulturen und Baumschulen möglich, wo bekannte Ballenschneider aufgrund ihrer Abmessungen nicht einsetzbar waren.

Zusätzlich kann ein Anschlagmittel oder eine Deichsel an der Bogenführung oder am Rahmen gehaltert sein, wodurch ein einfacher Transport mit einem beliebigen einfachen Zugfahrzeug und/oder einer Seilwinde kostengünstig ermöglich ist.

In einer weiteren vorteilhaften Ausgestaltung des Wurzelballen-Unterschneide- und Aushebegeräts können, ggf. auch zusätzlich für eine Kopplung mit einem Trägerfahrzeug, bspw. einem Traktor oder einem Bagger am Rahmen des Wurzelballen-Unterschneide- und Aushebegeräts ein Koppelelement - welches auch eine Schwenkachse aufweisen kann - für eine mechanische Kopplung und/oder ein weiteres Koppelelement für hydraulische Antriebe vorgesehen sein. An der Schwenkachse kann für die Kopplung mit dem Trägerfahrzeug ein sogenannter Rotator vorgesehen sein, welcher ausgebildet und eingerichtet ist, das bogenförmige Führungslager und den bogenförmigen Messerträger nebst Unterschneidemessern in einer horizontalen Ebene nach rechts und links um die Schwenkachse zu schwenken. Hierdurch ist es möglich, parallel zu einer Pflanzreihe und zwischen zwei Pflanzenreihen zu fahren und eine bestimmte Pflanze von der Seite her zu unterschneiden und auszuheben.

In einer besonders bevorzugten Weiterbildung weist das Wurzelballen-Unterschneide- und Aushebegerät wenigstens ein Koppelelement in Form mindestens einer elektrischen Steckverbindung für das Bedienpult, die elektrische Steuerungsmittel, Motoren, Elektrozylinder und/oder die Batterieeinheit auf.

Das elektrische Bedienpult kann beispielsweise als Tablet-Computer ausgebildet sein, wobei die Datenübertragung drahtlos beispielsweise mittels Bluetooth- oder Near-Field-Communication-Schnittstelle zu den elektrischen Steuermitteln erfolgen kann. Hierfür und für einen zumindest teilweise automatisierten Arbeitsprozess, wie der Einstellung der Ballengröße und oder der Ballenform weist zumindest ein Steuerungsmittel zweckmäßigerweise eine geeignete Software auf.

In einer besonders vorteilhaften Ausgestaltung des Wurzelballen-Unterschneide- und Aushebegeräts weist das bogenförmigen Führungslager wenigstens ein teleskopierbares Bogenstück, vorzugsweise zwei teleskopierbare Bogenstücke, auf, in denen jeweils mindestens eine Nutrolle zum Stützen des Messerträgers gelagert ist. Hiermit ist ermöglicht, den offenen Winkel des bogenförmigen Führungslager variabel zu gestalten und zu verringern, wodurch eine größere Stabilität sichergestellt ist.

Weiterhin ist das Wurzelballen-Unterschneide- und Aushebegerät ausgerüstet und eingerichtet verschiedene Unterschneidevorgänge durchzuführen, nämlich erstens ein Unterschneidevorgang, bei welchem ein Ausfahren der Unterschneidemesser kontinuierlich während der Rotation der Unterschneidemesser erfolgt und zweitens ein Unterschneidevorgang, bei welchem ein Ausfahren der Unterschneidemesser im Wechsel mit der Rotation, d.h. nach jeder Teilumdrehung oder ganzen Umdrehung erfolgt. Durch die überlagerten Bewegungen des Messerträgers und der Unterschneidemesser werden die aufzubringenden Drehmomente und Schnittkräfte gegenüber eines reinen Einstich- oder Unterschneidevorgangs erheblich reduziert.

Die Aufgabe wird erfindungsgemäß auch durch ein Verfahren für Baumschulen, im Garten- und Landschaftsbau sowie in der Forstwirtschaft zum Unterschneiden und Ausheben von Pflanzen mit Wurzelballen mit einem Wurzelballen-Unterschneide- und Aushebegerät gelöst, das zwei bogenförmige Unterschneidemesser, zwei Antriebsvorrichtungen zum Bewegen der Unterschneidemesser entlang einer im Wesentlichen vertikalen Führungsbahn Y, Y', einem bogenförmigen Führungslager und einem bogenförmigen Messerträger sowie wenigstens einen motorischen Antrieb zum Drehen des bogenförmigen Messerträgers in dem bogenförmigen Führungslager um eine im Wesentlichen vertikale Drehachse A umfasst, mit den Schritten
a) Heranführen des Wurzelballen-Unterschneide- und Aushebegeräts an die auszuhebende Pflanze, bis die auszuhebende Pflanze im Zentrum des bogenförmigen Messerträgers steht,
b) Absenken des bogenförmigen Führungslagers und/oder der Stützplatte entsprechend einer vorgegeben Wurzelballengröße, bis die Unterschneidemesser Bodenkontakt haben,
c) Rotieren des bogenförmigen Messerträgers mit den daran in Messerführungen gelagerten Unterschneidemessern, sodass diese jeweils in den Wirkbereich einer Rollenkette eine der Antriebsvorrichtungen gelangen, wobei ein jeweils an den Messerführungen gelagertes Kettenritzel in die Rollenkette eingreift,
d) Fortgesetztes Rotieren des bogenförmigen Messerträgers oder Stoppen des Rotierens des bogenförmigen Messerträgers,
e) Aktivieren der Antriebsvorrichtungen im Wirkbereich der Rollenkette und Bewegen der Unterschneidemesser um einen vorbestimmten Betrag abwärts entlang der Führungsbahn Y, Y', wobei diese in eine vorbestimmte Tiefe in den Boden eindringen,
f) Rotieren des bogenförmigen Messerträgers um 180 Grad oder um ein ganzzahliges Vielfaches von 180 Grad,
g) Wiederholen der Schritte d) bis f) bis eine vorbestimmte untere Endlage der Unterschneidemesser erreicht ist,
i) Anheben und/oder Ankippen des Wurzelballen-Unterschneide- und Aushebegeräts mit der auszuhebenden Pflanze nebst Wurzelballen über die Geländeoberkante und Absetzen der Pflanze mit dem Wurzelballen,
j) Aktivieren einer Bremselement zum Fixieren des Messerträgers,
k) Aktivieren der Antriebsvorrichtungen und Bewegen der Unterschneidemesser um einen vorbestimmten Betrag aufwärts entlang der Führungsbahn Y, Y', vorzugsweise bis in eine obere Endlage.

Zweckmäßigerweise erfolgt vor dem Schritt a) der Schritte:
- Einstellen der Neigung der Unterschneidemesser und/oder des Abstandes der Unterschneidemesser zueinander.

Bevorzugt können vor dem Schritt a) die Schritte Einstellen der Wurzelballengröße und/oder Einstellen der Wurzelballentiefe mittels eines Bedienpultes am Wurzelballen-Unterschneide- und Aushebegerät oder an einer Bedieneinrichtung an einem Trägerfahrzeug erfolgen.

Mit anderen Worten beinhaltet das erfindungsgemäße Verfahren zwei Varianten, nämlich:
Erste Variante: Der Messerträger führt fortlaufend eine 360° Bewegung aus, wobei die Unterschneidemesser bei jeder Umdrehung zweimal, nämlich im Wirkbereich der Rollenketten um einen definierten Betrag weiter in das Erdreich eindringen, bis sie ihre untere Endlage erreicht haben, quasi bis sich die Spitzen der Unterschneidemesser berühren und damit vollständig zusammengefahren sind. Dieser Vorgang erfolgt vorzugsweise gesteuert durch eine ersten Softwareroutine in Form einer Ablaufsteuerung.

Zweite Variante: Der Messerträger führt zunächst eine 180° Kreisbewegung aus und stoppt im Wirkbereich der ersten Rollenkette bzw. in der ersten Kettenvortriebs-Zone an einer definierten Position, die Unterschneidemesser fahren mit einer vorbestimmten Geschwindigkeit entlang der Führungsbahn Y, Y' in das Erdreich ein. Danach erfolgt die nächste 180° Kreisbewegung, bis die definierten Position in der zweiten Kettenvortriebs-Zone erreicht ist. Anschließend fahren die Unterschneidemesser wiederum mit einer vorbestimmten Geschwindigkeit entlang der Führungsbahn Y, Y' in das Erdreich ein. Dieser Vorgang wird wiederholt, bis die untere Endlage der Unterschneidemesser erreicht ist. Dieser Vorgang erfolgt vorzugsweise gesteuert durch eine zweite Softwareroutine in Form einer Ablaufsteuerung.

Besonders bevorzugt erfolgt vor dem Schritt c) der Schritt:
- Verankern des bogenförmigen Führungslagers durch an der Stützplatte angeordnete Ankerbleche und/oder
- Verankern des bogenförmigen Führungslagers durch Dorne oder Ankerbleche, die unterseitig an Fußrasten angeordnet sind.

In Verbindung mit einem Trägerfahrzeug erfolgen vor dem Schritt a) die Schritte:
- Ankoppeln des Wurzelballen-Unterschneide- und Aushebegeräts an ein Trägerfahrzeug und
- Verbinden des Hydrauliksystems des Trägerfahrzeugs mit dem Hydrauliksystem des Wurzelballen-Unterschneide- und Aushebegeräts.

Neben der vorstehend beschriebenen ersten Ausgestaltung des Wurzelballen-Unterschneide- und Aushebegeräts ist von der Erfindung eine zweite vorteilhafte Ausgestaltung umfasst. Das Wurzelballen-Unterschneide- und Aushebegerät in der zweiten Ausgestaltung weist ebenfalls zwei sich gegenüberstehende bogenförmige Unterschneidemesser auf, welche gemeinsam um eine Drehachse A rotierbar an einem bewegbaren bogenförmigen Messerträger angeordnet sind, der wiederum in einem stationären bogenförmigen Führungslager auf der der Drehachse A zugewandten Seite beweglich gelagert ist. Der Unterschied zu dem Wurzelballen-Unterschneide- und Aushebegerät in der ersten Ausgestaltung besteht darin, dass die Messerführungen um horizontale Achsen C, C' schwenkbar oder mit schwenkbare Messerlagern ausgebildet sind. Hierdurch es vorteilhafterweise möglich, dass die bogenförmigen Unterschneidemesser um 90° schwenkbar sind, so dass diese horizontal an dem Messerträger im Führungslager platzsparend ausgerichtet sind, was insbesondere Anfahren einer breitbuschigen Pflanze vorteilhaft ist. Die Bauart eröffnet eine völlig neue Weise des Unterschneidens eines Wurzelballens, nämlich durch eine gleichläufige oder gegenläufige Schwenkbewegung der Unterschneidemesser um die horizontalen Schwenkachsen C, C' in Verbindung einer Drehbewegung des Messerträgers um die vertikale Drehachse A.

Die Erfindung wird im Folgenden anhand bevorzugter Ausführungsformen unter Bezugnahme auf die beigefügten Figuren erläutert. Dabei zeigt
- Fig. 1: eine perspektivische Vorderansicht eines Wurzelballen-Unterschneide- und Aushebegeräts gemäß der Erfindung in einer ersten Ausgestaltung,
- Fig. 2: eine Rückansicht des Wurzelballen-Unterschneide- und Aushebegeräts aus Fig. 1,
- Fig. 3: eine Draufsicht des Wurzelballen-Unterschneide- und Aushebegeräts aus Fig. 1,
- Fig. 4: eine perspektivische Ansicht einer Messerführung mit einer Adaptereinheit und einem Messerlager,
- Fig. 5: eine perspektivische Seitenansicht des Wurzelballen-Unterschneide- und Aushebegeräts mit dem aus der Adaptereinheit entnommenen Messerlager,
- Fig. 6: eine perspektivische Rückansicht eines Rollenlagers des Wurzelballen-Unterschneide- und Aushebegeräts gemäß Fig. 1,
- Fig. 7: eine Ansicht des Wurzelballen-Unterschneide- und Aushebegeräts aus Fig. 1 in einer zweiten Betriebsstellung schräg von vorn,
- Fig. 8: eine perspektivische Draufsicht eines Wurzelballen-Unterschneide- und Aushebegeräts gemäß der Erfindung in einer zweiten Ausgestaltung,
- Fig. 9: eine perspektivische Vorderansicht eines Wurzelballen-Unterschneide- und Aushebegeräts gemäß der Erfindung in einer dritten Ausgestaltung,
- Fig. 10: eine perspektivische Teilansicht einer Bogenführung mit einem Messerträger und einem Unterschneidemesser in einer Messerführung aus Fig. 9,
- Fig. 11: eine perspektivische Rückansicht einer Bogenführung im Ausschnitt mit einer Antriebsvorrichtung gemäß der Erfindung aus Fig. 9,
- Fig. 12: eine perspektivische Teilansicht einer Bogenführung mit einer Messerführung aus Fig. 9 schräg von oben,
- Fig. 13: eine perspektivische Rückansicht eines bogenförmigen Führungslagers im Ausschnitt mit Rollenlagern aus Fig. 9,
- Fig. 14: eine perspektivische Ansicht eines Wurzelballen-Unterschneide- und Aushebegeräts gemäß der Erfindung in einer vierten Ausgestaltung schräg von vorn,
- Fig. 15: eine perspektivische Vorderansicht des Wurzelballen-Unterschneide- und Aushebegeräts aus Fig. 14,
- Fig. 16: eine perspektivische Untersicht einer Bogenführung im Ausschnitt mit einer Antriebsvorrichtung aus Fig. 14,
- Fig. 17: eine perspektivische Teilansicht einer Bogenführung mit einem Messerträger und einer Unterschneidemesser-Verstelleinrichtung aus Fig. 14,
- Fig. 18: eine perspektivische Rückansicht des Wurzelballen-Unterschneide- und Aushebegeräts in der vierten Ausgestaltung und
- Fig. 19: eine perspektivische Teilansicht eines Wurzelballen-Unterschneide- und Aushebegeräts gemäß der Erfindung in einer fünften Ausgestaltung schräg von vorn.

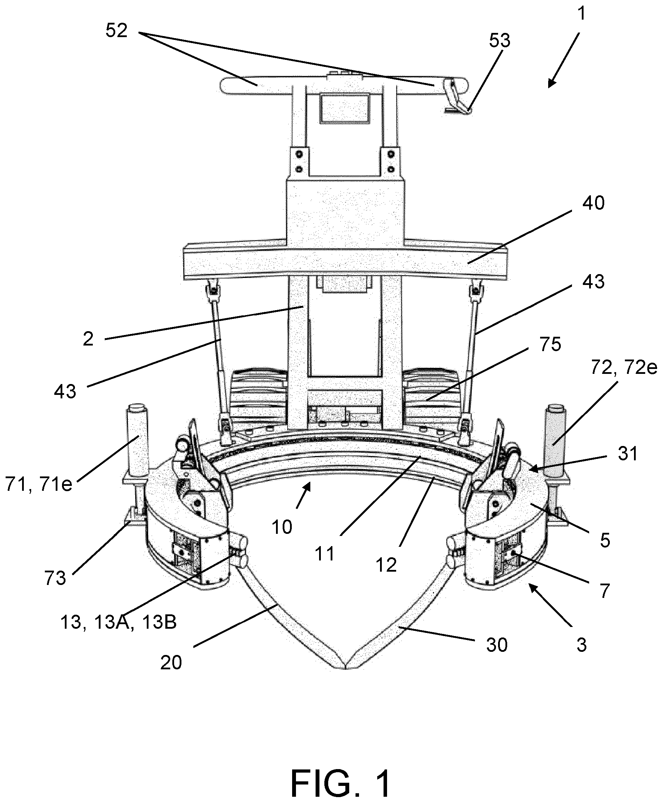

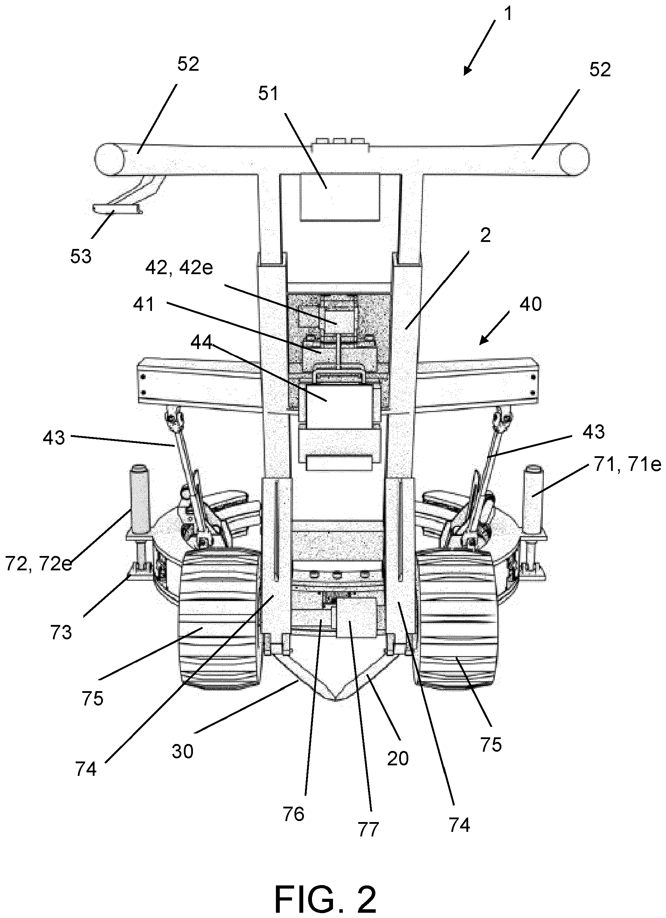

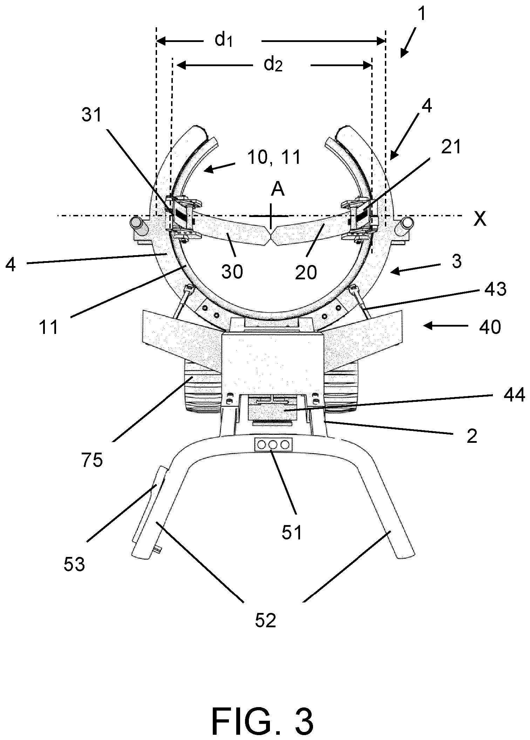

Es zeigen die Fig. 1 eine perspektivische Vorderansicht, die Fig. 2 eine perspektivische Rückansicht und die Fig. 3 eine perspektivische Draufsicht eines Wurzelballen-Unterschneide- und Aushebegeräts 1 gemäß der Erfindung in einer ersten Ausgestaltung mit zwei sich diametral gegenüberliegenden bogenförmigen Unterschneidemessern 20, 30. Wie die Figuren 1, 2 und 3 erkennen lassen, sind die Unterschneidemesser 20, 30 in Messerführungen 21, 31 um eine Drehachse A gemeinsam rotierbar an einem bewegbaren bogenförmigen Messerträger 10 angeordnet, welcher an einem stationären bogenförmigen Führungslager 4 auf der der Drehachse A zugewandten Seite beweglich gelagert ist. Das bogenförmige Führungslager 4 und der bogenförmige Messerträger 10 bilden eine Bogenführung 3, die mit einem Rahmen 2 verbunden ist. In der gezeigten Grundstellung des Messerträgers 10 weist die Bogenführung 3 einen Öffnungswinkel von ca. 80° auf. Zum manuellen Bewegen und Positionieren des Wurzelballen-Unterschneide- und Aushebegeräts 1 sind am oberen Ende des Rahmens 2 zwei Handgriffe 52 angeordnet und am unteren Ende des Rahmens 2 zwei Räder 75 auf einer Welle oder Achse 76 drehbar gelagert. Der Antrieb der Räder 75 erfolgt durch einen Fahrmotor 77. Somit lässt sich eine auszuhebende Pflanze einfach anfahren, wobei der Stamm bzw. das Zentrum der Pflanze in der Drehachse A positionierbar ist. Der Antrieb des bogenförmigen Messerträgers 10 erfolgt durch einen Motor 42, welcher im Ausführungsbeispiel als Elektromotor 42e ausgebildet ist und einer Getriebeanordnung, welche ein Getriebe 41 einen Getriebekasten 40, zwei Gelenkwellen 43 und wenigstens zwei achsparallele Zahnräder innerhalb des Führungslagers 4 umfasst. Die, nicht explizit dargestellten Zahnräder innerhalb des Führungslagers 4 wirken in einer gemeinsamen horizontalen Ebene direkt mit einer an dem Messerträger 10 angeordnete bogenförmige Zahnstange 13A zusammen, sodass der im Führungslager 4 eingespannte Messerträger 10 um einen beliebigen Winkel um die Drehachse A drehbar ist. Zum Steuern des Winkels und der Geschwindigkeit des Messerträgers 10 sind benachbart zu den Haltegriffen 52 ein Bedienpult 51 mit Befehlsgeräten und wenigstens ein Bedienhebel 53 am Lenker vorgesehen. Weiterhin kann eine - hier nicht dargestellte - Anzeigeeinheit im oder am Bedienpult 51 vorgesehen sein. Wie insbesondere die Fig. 2 erkennen lässt, ist zur Energieversorgung des Fahrmotors 77, des Elektromotors 42e, des Bedienpultes 51 und einer dort integrierter Steuereinrichtung eine Batterieeinheit 44 am Rahmen 2 lösbar gehaltert, wodurch ein autarker Betrieb sichergestellt ist. Wie insbesondere die Fig. 1 erkennen lässt, sind an dem Rahmen 2 zwei schwenk- und arretierbare T-förmige Fußrasten 74 gelagert. Die Fußrasten 74 sind in drei Positionen arretierbar, nämlich ersten, wie in Fig. 1 dargestellt in hochgeklappter Position, zweitens in horizontaler Position, sodass sich die Bedienperson daraufstellen kann und drittens in einer abgesenkten Position, sodass der nach unten weisende Steg der T-förmigen Fußrasten 74 in das Erdreich eindringt, womit das Wurzelballen-Unterschneide- und Aushebegerät 1 gegen ein Verdrehen während des Betriebs gesichert ist.

In einem nicht dargestellten Ausführungsbeispiel kann das Antriebssystem mit Direktantrieben ausgeführt sein, wobei dann zwei Elektromotoren auf dem Führungslager 4, symmetrisch um eine quer zur Drehachse A verlaufende Mittelachse, um einen Bogenwinkel von etwa 60° beabstandet, angeordnet sind. Die sich darunter innerhalb des Führungslagers 4 gelagerten Zahnräder sind jeweils mit der Motorwelle der Elektromotoren verbunden und wirken direkt mit der, an dem Messerträger 10 angeordneten, bogenförmigen Zahnstange 13A zusammen. Anstelle der bogenförmigen Zahnstange 13A kann auch ein einstückiges Zahnkranzsegment 13A oder mehrteiliges Zahnkranzsegment 13B oder eine bogenförmige Schiene mit rechteckförmigen Durchbrüchen für einen Eingriff der Zahnräder vorgesehen sein.

Wie insbesondere die Fig. 3 erkennen lässt, ist der mittleren Durchmesser d₂ des bogenförmigen Messerträgers 10 kleiner als der mittleren Durchmesser d₁ des bogenförmigen Führungslagers 4. Die Bogenlängen des Führungslagers 4, des Messerträgers 10, Führungsprofile 11, 12 und der Zahnstange 8 betragen im Ausführungsbeispiel etwas mehr als 3/4 des jeweiligen Durchmessers mal n (Pi), oder anders ausgedrückt betragen die Bogenwinkel etwa 280°. Hiermit sind zum einen ein hinreichender Öffnungswinkel von ca. 80° zum Passieren eines Stammes einer auszuhebenden Pflanze und zum anderen eine hohe Steifigkeit der Bogenführung 3 insgesamt sichergestellt. Aufgrund der erfindungsgemäßen Anordnung-des Motors 42, der Gelenkwellen 43 und der-damit gelenkig verbundenen unteren, in einen Bogenwinkel von etwa 60° beabstandeten Zahnräder, kann der Messerträger 10 mit den daran gehalterten Messerführungen 21, 31 und den darin gelagerten Unterschneidemessern 20, 30 mehrfach auf einer Kreisbahn um die Drehachse A umlaufen und den Öffnungswinkel des Führungslagers 4 von ca. 80° überbrücken.

Wie die Figuren 1 bis 3 weiter erkennen lassen, sind an dem Führungslager 4 zwei vertikal ausfahrbare Stützen 71, 72 mit einer daran gehalterten kreisringsegmentförmigen Stützplatte 73 angeordnet, wobei deren Bogenwinkel im Wesentlichen gleich dem des Führungslagers 4 ist. Die Stützen 71, 72 sind mechanisch einstellbar und arretierbar und/oder weisen bevorzugt elektrische Stellantriebe auf, die entsprechend des gewünschten Abstands des Führungslagers 4 zum Boden ausfahrbar und arretierbar sind. Hierdurch lässt sich die Ballengröße und die Ballenform bestimmen. Die im Ausführungsbeispiel gezeigte kreisringsegmentförmigen Stützplatte 73 ist an den Stützen 71, 72 lösbar gehaltert, sodass diese bei Bedarf einfach gegen zwei kleinere kreisringsegmentförmigen oder tellerförmige Stützplatten 73 auswechselbar ist, womit eine optimale Anpassung an die jeweiligen Bodenverhältnisse herstellbar ist. Die Stützen 71, 72 sind im Ausführungsbeispiel als Elektrozylinder 71e, 72e ausgebildet.

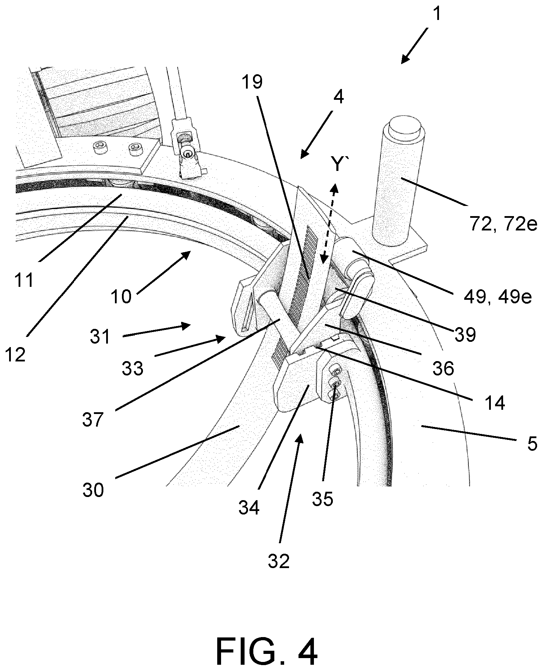

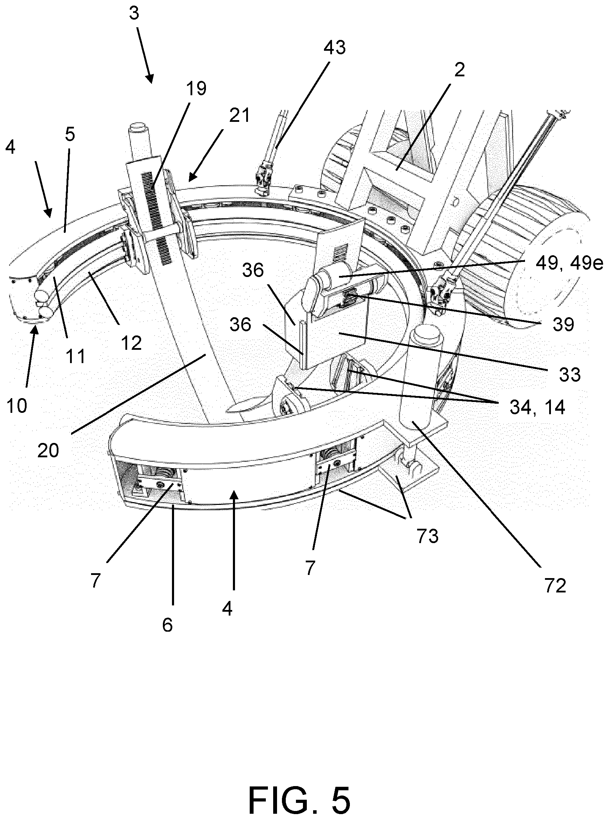

Um das Wurzelballen-Unterschneide- und Aushebegerät 1 sowohl für tiefe als auch für flache Wurzelballen optimal nutzen zu können, d.h. nur so viel Erdreich wie nötig auszuheben, weist das Wurzelballen-Unterschneide- und Aushebegerät zwei einstellbare Messerführungen 21, 31 auf. Die Figur 4 zeigt eine perspektivische Seitenansicht der Messerführung 31 des Wurzelballen-Unterschneide- und Aushebegeräts 1 schräg von vorn. Die Messerführungen 21, 31 umfassen jeweils eine Adaptereinheit 22, 32 und eine Messerlager 23, 33 für ein bogenförmiges Unterschneidemesser 20, 30, wobei die Messerlager 23, 33 lösbar in der Adaptereinheit 22, 32 gelagert ist. Die Fig. 4 zeigt die Messerführungen 31 mit der, in die Adaptereinheit 32 aufgenommene Messerlager 33. Die Fig. 5 zeigt dagegen, die in der Figur rechts dargestellte Messerführung 31 mit der aus der Adaptereinheit 32 entnommenen Messerlager 33, während die in der Figur links dargestellte Messerführung 21 mit eingesetzter Messerlager 23 gezeigt ist. Die Adaptereinheiten 22, 32 sind am bogenförmigen Messerträger 10, radial nach innen zur Drehachse A gerichtet, angeordnet. Jede Adaptereinheit 22, 32 umfasst ein Paar Wangen 24, 34 und wenigstens ein Halteelement 25, 35, das am bogenförmigen Messerträger 10 befestigt ist. Die Wangen 24, 34 weisen auf ihren einander zugewandten Seiten im Ausführungsbeispiel jeweils drei nach oben gerichtete offene Nuten 14, zum Aufnehmen eines Steges 17 eines Messerlagers 23, 33 auf. Die Nuten 14 verlaufen in verschieden spitzen Winkeln und/oder parallel zur Drehachse A, wodurch sich verschiedene Einsatzwinkel und Abstände für die jeweilige Messerlager 23, 33 und somit für die Unterschneidemesser 20, 30 ergeben. Es können jedoch auch weniger oder mehr Nuten 14 pro Wange 24, 34 vorgesehen sein. Wie die Figuren 4 und 5 weiter erkennen lassen, umfassen die Messerlager 23, 33 jeweils mindestens eine Führungsrolle 27, 37 auf der Vorderseite und mindestens eine hier verdeckte Führungsrolle 28, 38 auf der Rückseite eines eingesetzten Bogenmessers 20, 30. Weiterhin ist auf der Rückseite jedes Unterschneidemessers 20, 30 ein Antriebsritzel 29, 39 in dem Messerlager 23, 33 gelagert, welches mit seinen Zahnflanken in Durchbrüche 19 des Unterschneidemessers 20, 30 eingreift und somit bei Rotation des Antriebsritzels 29, 39 das jeweilige Unterschneidemesser 20, 30 entlang der Führungsbahnen Y, Y' bewegt. Die Antriebsritzel 29, 39 werden im Ausführungsbeispiel jeweils, mittels eines gekapselten Zahnriemens, Getriebes oder einer verkleideten Kette, durch einen Elektromotor 49e angetrieben, welcher beispielsweise über eine, hier nicht dargestellte Steckverbindung, mit einem Schleifring am Messerträger 10 zwecks Spannungsversorgung verbunden ist. In einem nicht gezeigten Ausführungsbeispiel erfolgt das Bewegen der Unterschneidemesser 20, 30 entlang der Führungsbahnen Y, Y' rein mechanisch und zwar bei jeder 360° Umdrehung des Messerträgers 10 um einen vorbestimmten Betrag. Die Antriebsritzel 29, 39 werden intermittierend bei einem vorgebaren Winkel mittels eines Nockens an dem Führungslager 4 quasi durch den Messerträger 10 selbst angetrieben, wobei der "vorbeilaufende" Nocken auf einen federbelastenden Hebel wirkt, dessen Bewegung in eine begrenzte Drehbewegung des jeweiligen Antriebsritzels 29, 39 erfolgt.

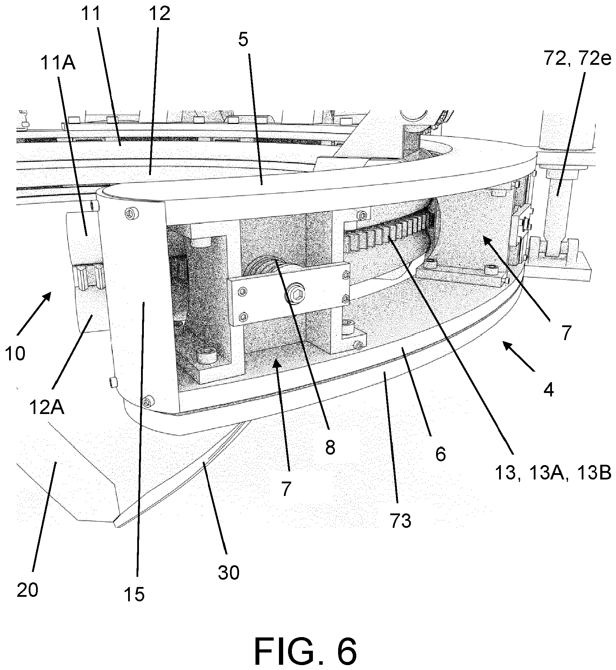

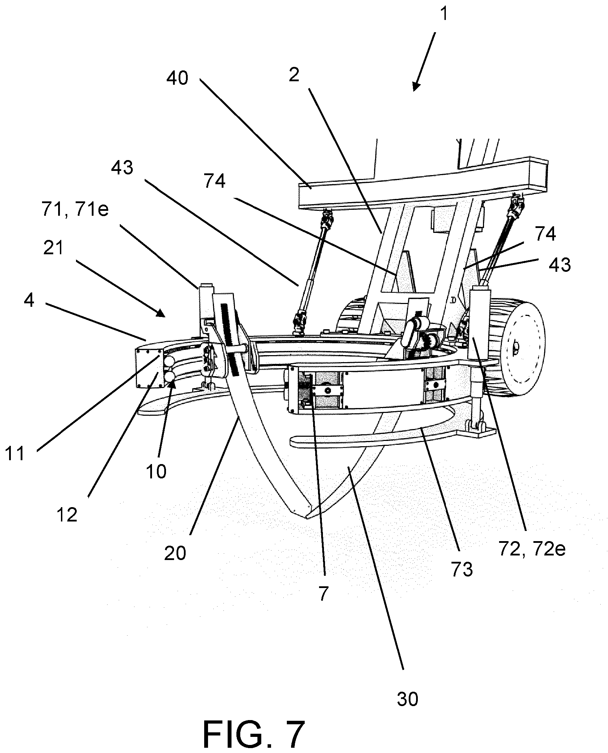

Die Fig. 6 zeigt eine Detailansicht des offenen bogenförmigen Führungslagers 4 schräg von außen mit den zwei Rollenlagern 7, die mit der oberen kreisringsegmentförmigen Deckplatte 5 und der unteren kreisringsegmentförmigen Bodenplatte 6 verschraubt sind. In den Rollenlagern 7 sind jeweils zwei Nutrollen 9 übereinander drehbar und durch eine Druckfeder 8 federnd gelagert. Die in einem Kreisbogen angeordneten Rollenlager 7 bilden zusammen mit den Nutrollen 9 ein radiale Lagerung für den Messerträger 10, wobei die oberen Nutrollen 9 mit ihren konkaven Nuten auf das obere rohrförmige Führungsprofil 11 mit seiner konvexen Lauffläche 11A drücken und die unteren Nutrollen 9 mit ihren konkaven Nuten auf das untere rohrförmige Führungsprofil 12 mit der konvexen Lauffläche 12A drücken, wodurch der Messerträger 10 um die vertikale Achse A rotierbar eingespannt ist. Wie die Fig. 6 erkennen lässt ist zwischen dem oberen rohrförmige Führungsprofil 11 mit der konvexen Lauffläche 11A und dem untere rohrförmige Führungsprofil 12 mit der konvexen Lauffläche 12A das Antriebselement 13 in Form einer bogenförmigen Zahnstange 13A oder eines Zahnkranzsegments 13B angeordnet, wobei das Antriebselement 13 bzw. die Zahnstange 13A oder das Zahnkranzsegments 13B mit zwei im Führungslager 4 gelagerten nicht dargestellten Zahnrädern zusammenwirkt. Wie die Fig. 6 und insbesondere die Fig. 7 weiter erkennen lassen, ist unterhalb der Bodenplatte 6 die kreisringsegmentförmigen Stützplatte 73 an der Stütze 72 - die im Ausführungsbeispiel als Elektrozylinder 72e ausgebildet ist - lösbar gehaltert, sodass diese bei Bedarf einfach auswechselbar ist.

Die Fig. 7 zeigt eine perspektivische Ansicht eines Wurzelballen-Unterschneide- und Aushebegeräts 1 gemäß der Erfindung in einer Betriebsstellung, in der die Stützplatte 73 mittels der Stützen 71, 72 durch die Elektrozylinder 71e, 72e abgesenkt ist. Wie die Fig. 7 erkennen lässt, kann das Führungslager 4 und die an den Führungsprofilen 11, 12 des Messerträgers 10 gehalterten Messerführungen 21, 31 nebst der bogenförmigen Unterschneidemesser 20, 30 durch ein Anheben oder Absenken der Stützplatte 73 sowohl für tiefe als auch für flache Wurzelballen einfach eingestellt werden, sodass nur so viel Erdreich wie nötig auszuheben ist. Wie die Fig. 7 weiter erkennen lässt, sind an dem Rahmen 2 die schwenk- und arretierbare T-förmige Fußrasten 74 in hochgeklappter Position gezeigt.

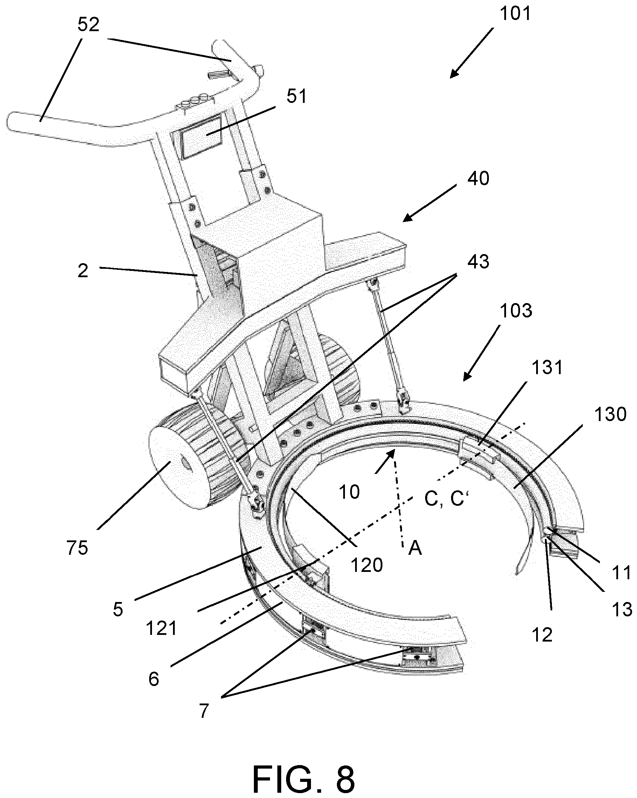

Die Fig. 8 zeigt eine perspektivische Ansicht eines Wurzelballen-Unterschneide- und Aushebegeräts 101 gemäß der Erfindung in einer zweiten Ausgestaltung. Das Wurzelballen-Unterschneide- und Aushebegerät 101 in der zweiten Ausgestaltung weist ebenfalls zwei sich gegenüberstehende bogenförmige Unterschneidemesser 120, 130 auf, welche gemeinsam um eine Drehachse A rotierbar an einem bewegbaren bogenförmigen Messerträger 10 angeordnet sind, der wiederum in einem stationären bogenförmigen Führungslager 104 auf der der Drehachse A zugewandten Seite beweglich gelagert ist. Das bogenförmige Führungslager 104 und der bogenförmige Messerträger 110 bilden eine Bogenführung 103. Der Unterschied zu dem Wurzelballen-Unterschneide- und Aushebegerät 1 in der ersten Ausgestaltung gemäß der Figuren 1 bis 6 besteht darin, dass die Messerführungen 121, 131 um horizontale Achsen C, C' schwenkbar oder mit schwenkbare Messerlagern ausgebildet sind. Hierdurch es möglich, dass die bogenförmigen Unterschneidemesser 120, 130 um 90° schwenkbar sind, so dass dies horizontal an dem Messerträger 10 im Führungslager 4 platzsparend gelagert sind. Die Bauart eröffnet eine völlig neue Weise des Unterschneidens eines Wurzelballens, nämlich durch eine gleichläufige oder gegenläufige Schwenkbewegung der Unterschneidemesser 120, 130 um die horizontalen Schwenkachsen C, C' in Verbindung einer Drehbewegung um die vertikale Drehachse A. Dadurch, dass die bogenförmigen Unterschneidemesser um 90° in eine horizontale Lage schwenkbar und somit am Messerträger platzsparend ausgerichtet sind, ist insbesondere ein Anfahren einer breitbuschigen Pflanze im unteren Bereich besonders gut möglich.

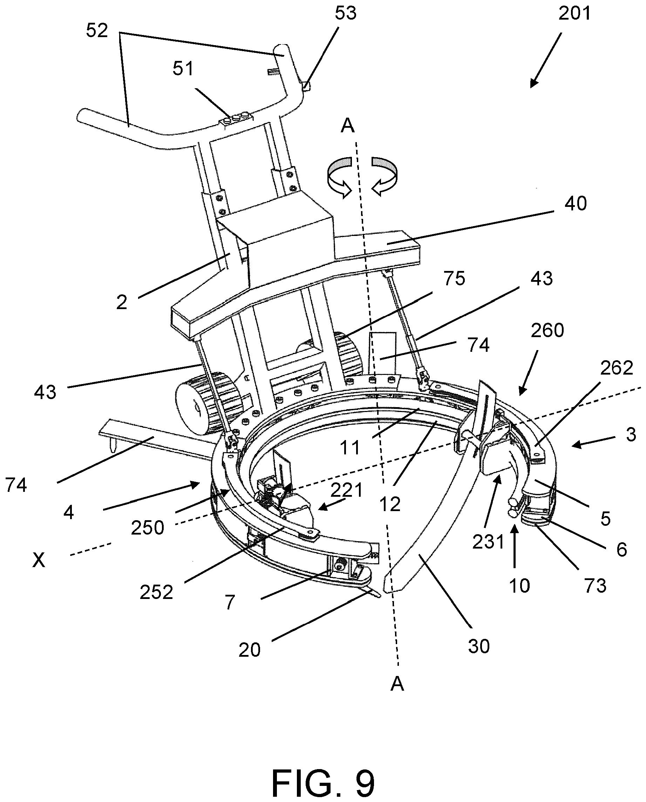

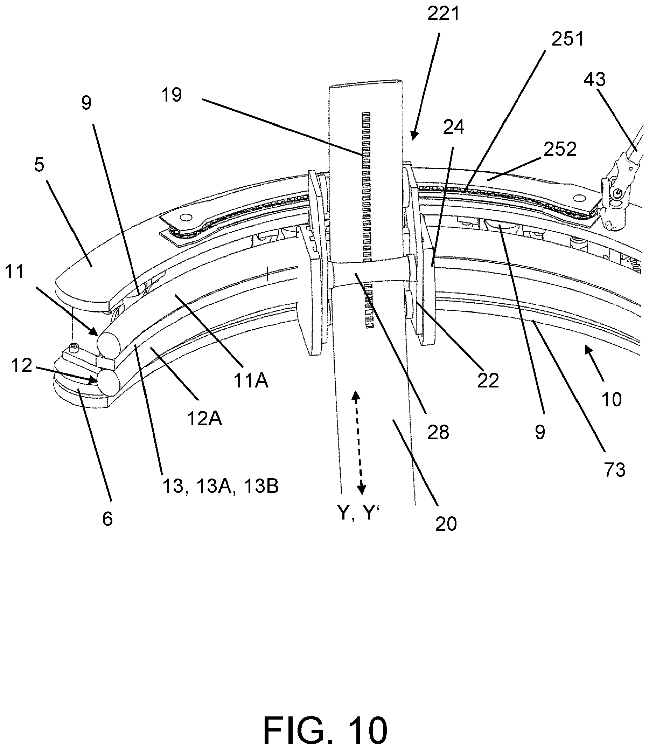

Es zeigt die Fig. 9 eine perspektivische Draufsicht eines Wurzelballen-Unterschneide- und Aushebegeräts 201 in einer dritten erfindungsgemäßen Ausgestaltung schräg von vorn, wiederum mit zwei sich diametral gegenüberliegenden bogenförmigen Unterschneidemessern 20, 30, wobei die für diese dritte Ausgestaltung spezifischen Elemente mit 2xx gekennzeichnet sind. Wie die Figur 9 erkennen lässt, sind die Unterschneidemesser 20, 30 in Messerführungen 221, 231 ebenfalls um die vertikale Drehachse A gemeinsam rotierbar an einem bewegbaren bogenförmigen Messerträger 10 angeordnet, welcher an einem stationären bogenförmigen Führungslager 4 auf der der Drehachse A zugewandten Seite beweglich gelagert ist. Das bogenförmige Führungslager 4 und der bogenförmige Messerträger 10 bilden eine Bogenführung 3, die mit einem Rahmen 2 verbunden ist. Das bogenförmige Führungslager 4 weist eine kreisringsegmentförmige Deckplatte 5 und eine kreisringsegmentförmige Bodenplatte 6 auf, zwischen denen im Ausführungsbeispiel neun gleichmäßig beabstandete Rollenlager 7 angeordnet sind. In der gezeigten Grundstellung des Messerträgers 10 weist die Bogenführung 3 einen Öffnungswinkel von ca. 80° auf. Zum manuellen Bewegen und Positionieren des Wurzelballen-Unterschneide- und Aushebegeräts 201 sind am oberen Ende des Rahmens 2 zwei Handgriffe 52 angeordnet und am unteren Ende des Rahmens 2 sind zwei Räder 75 auf einer Welle oder Achse drehbar gelagert. Der Antrieb des bogenförmigen Messerträgers 10 erfolgt durch einen nicht dargestellten Elektro- oder Hydraulikmotor, welcher, wie bei der ersten Ausgestaltung des Wurzelballen-Unterschneide- und Aushebegeräts 1 gemäß Fig. 1 bis 7, am Rahmen 2 gehaltert ist und einer Getriebeanordnung, welche einen Getriebekasten 40 und zwei Gelenkwellen 43 umfasst. Die Gelenkwellen 43 sind mit jeweils mit einer Antriebsvorrichtung 250, 260 verbunden, mittels der der Messerträger 10 um einen beliebigen Winkel um die Drehachse A drehbar ist. Die Antriebsvorrichtungen 250, 260, weisen jeweils eine Kettenführung 252, 262 auf in der eine endlose Rollenkette 251, 261 in einer horizontalen Ebene bogenförmig um ein Antriebsritzel und ein Umlenkrad geführt sind (vgl. Fig. 10). Die Kettenführungen 252, 262 sind auf der Deckplatte 5 des bogenförmigen Führungslagers 4 angeordnet.

Zum Steuern des Drehwinkels und der Geschwindigkeit des Messerträgers 10 sind benachbart zu den Handgriffen 52 ein Bedienpult 51 mit Befehlsgeräten und wenigstens ein Bedienhebel 53 am Lenker vorgesehen. Wie die Fig. 9 erkennen lässt, sind an dem Rahmen 2 zwei schwenk- und arretierbare Fußrasten 74 gelagert. Die Fußrasten 74 sind in drei Positionen arretierbar, nämlich einer ersten, wie in Fig. 9 dargestellt in einer horizontaler Position, zweitens in einer hochgeklappter Position und drittens in einer abgesenkten Position, sodass die nach unten weisende Zapfen der Fußrasten 74 in das Erdreich eindringen können, womit das Wurzelballen-Unterschneide- und Aushebegerät 201 gegen ein Verdrehen während des Betriebs gesichert ist.

In einem nicht dargestellten Ausführungsbeispiel können die Antriebssysteme 250, 260 mit Direktantrieben verbunden sein oder solche umfassen, wobei an Stelle der Gelenkwellen 43 zwei Direktantriebe in Form von Hydraulik- oder Elektromotoren auf dem Führungslager 4, um einen Bogenwinkel von etwa 60° beabstandet, angeordnet wären, die jeweils mit der Eingangswelle eines Getriebes 254 einer Antriebsvorrichtung 250, 260 verbunden wären.

Wie die Figuren 9 bis 11 weiter erkennen lassen, ist unterhalb der Bodenplatte 6 des Führungslagers 4 wiederum eine absenkbare kreisringsegmentförmigen Stützplatte 73 angeordnet, wobei deren Bogenwinkel im Wesentlichen gleich dem des Führungslagers 4 ist. Die Stützplatte 73 ist im Abstand zum Boden einstell- und arretierbar. Hierdurch lässt sich die Ballengröße sehr einfach variieren und bestimmen. Um das Wurzelballen-Unterschneide- und Aushebegerät 201 sowohl für tiefe als auch für flache Wurzelballen optimal nutzen zu können und dabei nur so viel Erdreich wie nötig auszuheben, weist das Wurzelballen-Unterschneide- und Aushebegerät 201 zudem zwei einstellbare Messerführungen 221, 231 auf.

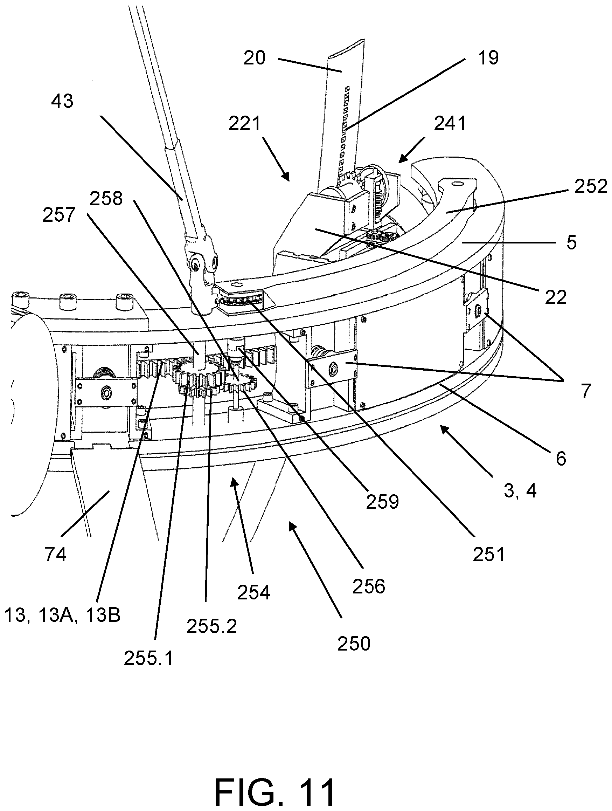

Die Fig. 10 zeigt eine perspektivische Teilansicht der Bogenführung 3 mit dem Messerträger 10 und dem Unterschneidemesser 20 in einer Messerführung 221. Wie die Fig. 10 erkennen lässt, ist zwischen dem oberen rohrförmige Führungsprofil 11 und dem untere rohrförmige Führungsprofil 12 das Antriebselement 13, in Form einer bogenförmigen Zahnstange 13A oder wenigstens eines Zahnkranzsegments 13B, angeordnet, wobei das Antriebselement 13 nämlich die Zahnstange 13A oder das Zahnkranzsegments 13B mit der im Führungslager 4 gelagerten Antriebsvorrichtung 250 zusammenwirkt. Entsprechend wirken das obere rohrförmige Führungsprofil 11 und das untere rohrförmige Führungsprofil 12 mit den Nutrollen 9 zusammen, welche in den Rollenlagern 7 paarweise gelagert sind. Weiterhin ist der Figur 10 der Verlauf der Rollenkette 251 in der Kettenführung 252 zu entnehmen. Die Figur 10 zeigt weiterhin die Messerführung 221 und das bogenförmige Unterschneidemesser 20, welches in einem Messerlager 23 in einer Adaptereinheit 22 seitlich geführt ist. Die Vorderseite des Unterschneidemessers 20 wird durch die Führungsrolle 28 geführt. Das bogenförmige Unterschneidemesser 20 weist Durchbrüche 19 auf, in die das Schneckenrad 243 über eine Schneckenwelle 242 eines Schneckengetriebes 241 (Fig. 11-13), zum Bewegen des Unterschneidemessers 20 entlang der Führungsbahnen Y, Y', eingreift.

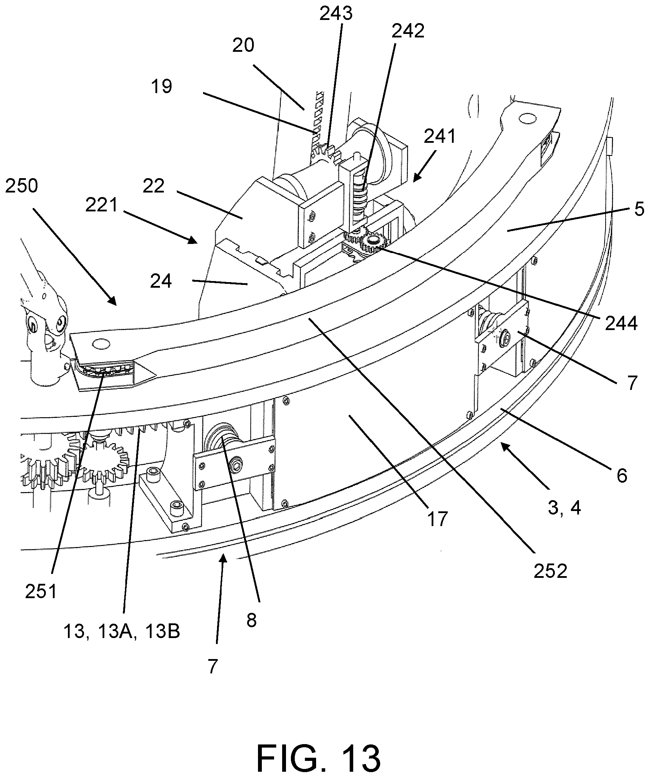

Die Fig. 11 und 13 zeigen jeweils eine Detailansicht des offenen bogenförmigen Führungslagers 4 der Bogenführung 3 mit der Deckplatte 5 und der Bodenplatte 6, zwischen denen Komponenten der Antriebsvorrichtung 250, insbesondere ein Getriebe 254 und die Rollenlager 7 angeordnet sind. In den Rollenlagern 7 sind - wie in der ersten Ausgestaltung -jeweils zwei Nutrollen 9 übereinander drehbar und durch eine Druckfeder 8 federnd gelagert. Die in einem Kreisbogen angeordneten Rollenlager 7 bilden mit den Nutrollen 9 eine radiale Lagerung für den Messerträger 10, wodurch der Messerträger 10 um die vertikale Achse A rotierbar eingespannt ist. Wie insbesondere der Fig. 11 zu entnehmen ist, umfasst die Antriebsvorrichtung 250 das Getriebe 254 mit einer ersten Getriebewelle 257 auf der ein erstes Zahnrad 255.1 verschiebbar gelagert ist, welches in einer vorbestimmten Position mit der bogenförmigen Zahnstange 13A zwecks Rotation des Messerträgers 10 zusammenwirkt, wobei die Getriebewelle 257 eingangsseitig wiederum mit der Gelenkwelle 43 drehfest verbunden ist.

Auf der ersten Getriebewelle 257 ist ein weiteres Zahnrad 255.2 verschiebbar gelagert, welches mit einem Zahnrad 256, auf einer zweiten Getriebewelle 258 zusammenwirkt. In Verlängerung der zweiten Getriebewelle 258 nach oben ist eine Kupplung 259 angeordnet, welche in weiterer Verlängerung nach oben mit einem von der Rollenkette 251 verdeckten Kettenritzel 253 verbunden ist. Die Rollenkette 251 verläuft mit ihrem - dem Messerträger 10 zugewandtem Antriebs- oder Lasttrum bogenförmig in der bogenförmigen Kettenführung 252, die auf der bogenförmigen Deckplatte 5 angeordnet ist. Mit anderen Worten, die Rollenkette weist in ihrem Wirkbereich oder dem sogenannten Kettenvortriebsabschnitt einen Kreisbogenabschnitt auf, dessen Mittelpunkt in der Drehachse A liegt. Die Rollenkette 251 kann somit in entsprechender Winkelposition des Messerträgers 10 über ein Kettenritzel 253 und den Zahnrädern 244 mit der Schneckenwelle 242 des Schneckengetriebes 241 verbunden sein, wobei die Zahnflanken des Schneckenrades 243 abtriebsseitig in Durchbrüche 19 des Unterschneidemessers 20 eingreifen. Je nach Drehrichtung des Schneckenrades 243 auf der Antriebsrolle 229 ist das Unterschneidemesser 20 nach unten oder nach oben entlang der Führungsbahn Y, Y' bewegbar. Um den Messerträger 10 insbesondere während der Aufwärtsbewegung der Unterschneidemesser 20, 30 zu fixieren oder festzusetzen ist im bogenförmigen Führungslager 4 wenigstens ein nicht dargestelltes Bremselement angeordnet. Wie der Figur 13 zu entnehmen ist kann das z.T. offen dargestellte Führungslager 4 von außen durch Bleche 17 vollständig verschlossen sein oder werden, wobei im Ausführungsbeispiel nur einige Bleche 17 gezeigt sind.

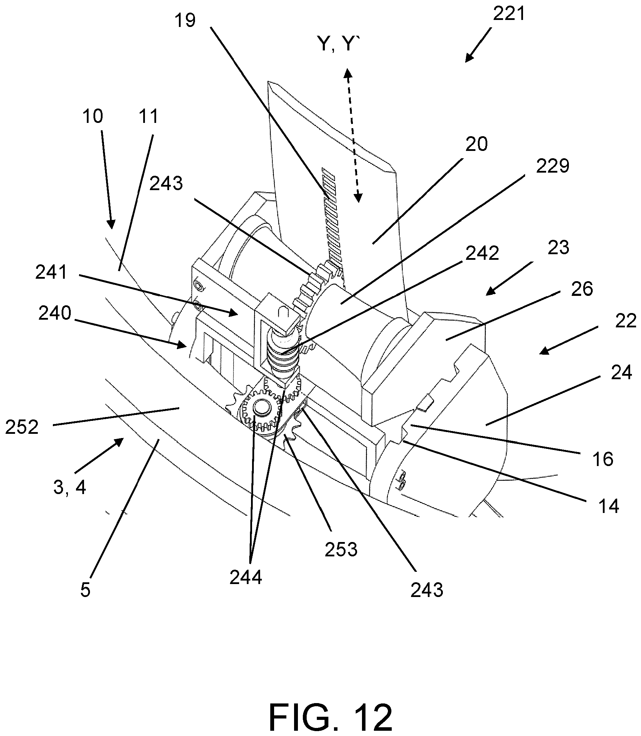

Die Fig. 12 zeigt eine perspektivische Teilansicht schräg von oben einer Bogenführung 3 mit einer Messerführung 221, mit einem Messerlager 23 sowie einer Adaptereinheit 22, welche ein Paar Wangen 24 umfasst, die am bogenförmigen Messerträger 10 befestigt sind. Die Wangen 24 weisen auf ihren einander zugewandten Seiten im Ausführungsbeispiel jeweils drei nach oben gerichtete offene Nuten 14, zum Aufnehmen eines Steges 16 des Messerlagers 23, auf. Die Nuten 14 verlaufen in verschieden spitzen Winkeln und/oder parallel zur Drehachse A, wodurch sich verschiedene Einsatzwinkel und Abstände für das jeweilige Messerlager 23 und somit für das Unterschneidemesser 20, 30 ergeben. Jedes Messerlager 23 umfasst mindestens eine Führungsrolle 28 auf der Vorderseite (Fig. 10) und mindestens eine hier verdeckte Führungsrolle auf der Rückseite des eingesetzten Unterschneidemessers 20, 30. Weiterhin ist auf der Rückseite des oder jedes Unterschneidemessers 20, 30 eine Antriebsrolle 229 in dem Messerlager 23 gelagert, wobei das Schneckenrad 243 auf der Antriebsrolle 229 aufgebracht ist und die Zähne des Schneckenrades 243 in die Durchbrüche 19 des Unterschneidemessers 20, 30 eingreifen und somit bei Rotation der Antriebsrolle 229 das jeweilige Unterschneidemesser 20, 30 entlang der Führungsbahnen Y, Y' bewegbar ist. In Verlängerung der Schneckenwelle 242 nach unten ist ein Drehwinkelgeber 245 gelagert, welcher über die Winkelstellung der Schneckenwelle 242 die Position des Unterschneidemessers 20, 30 detektiert und durch drahtlose Signalübertragung für ein weitere steuerungstechnische Verarbeitung bereitstellt.

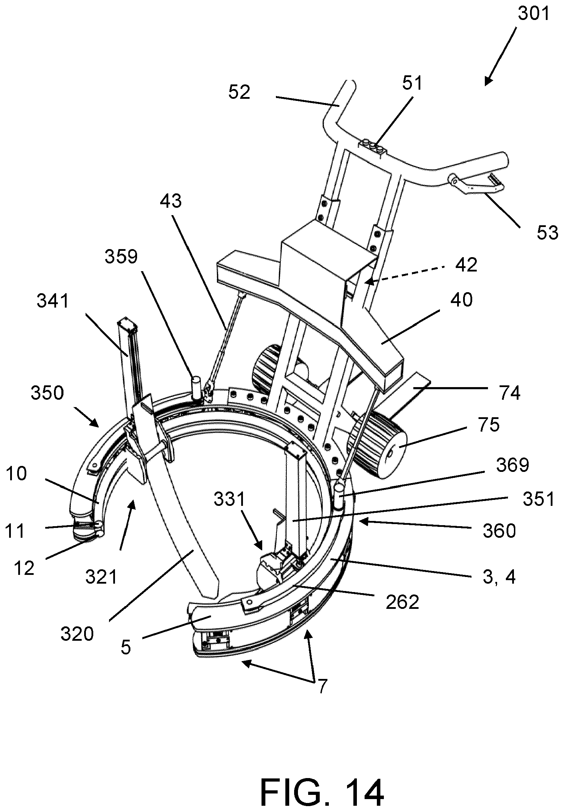

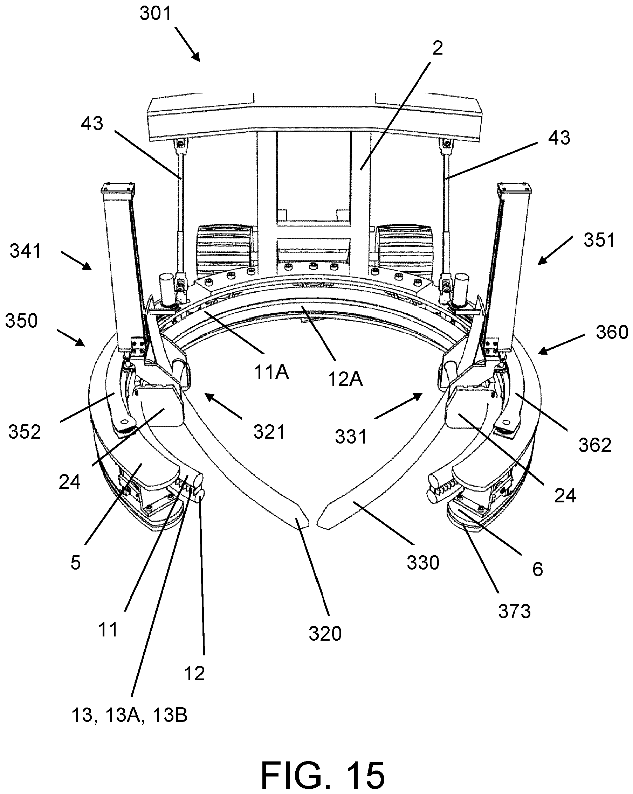

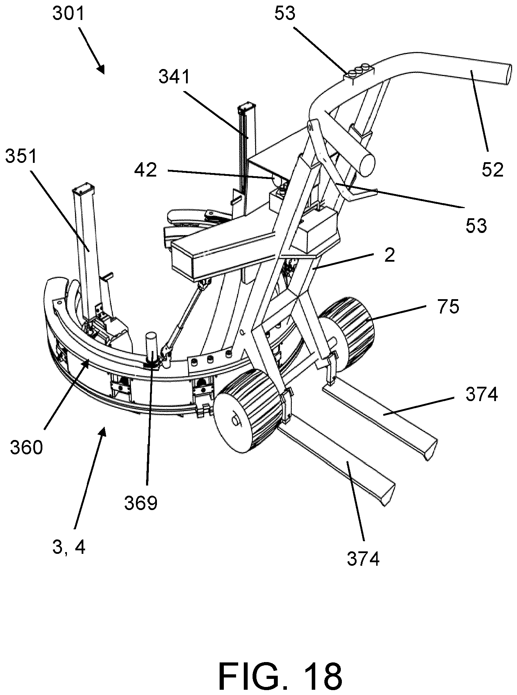

Eine vierte Ausgestaltung eines Wurzelballen-Unterschneide- und Aushebegeräts 301 gemäß der Erfindung zeigen die Figuren 14, 15 und 18, nämlich Fig. 14 eine perspektivische Vorderansicht schräg von oben, Fig. 15 eine perspektivische Ansicht von vorn und Fig. 18 eine perspektivische Rückansicht schräg von oben. Das Wurzelballen-Unterschneide- und Aushebegeräts 301 weist wiederum zwei sich diametral gegenüberliegenden bogenförmigen Unterschneidemessern 320, 330 auf. Wobei die, für die vierte Ausgestaltung spezifischen Elemente mit 3xx gekennzeichnet sind. Wie die insbesondere die Fig. 15 erkennen lässt, sind die Unterschneidemesser 320, 330 wiederum in Messerführungen 321, 331 an dem rotierbaren bogenförmigen Messerträger 10 angeordnet, welcher innenseitig an dem bogenförmigen Führungslager 4 auf der der Drehachse A zugewandten Seite beweglich gelagert und eingespannt ist. Das Wurzelballen-Unterschneide- und Aushebegeräts 301 in der vierten Ausgestaltung unterscheidet sich gegenüber dem Wurzelballen-Unterschneide- und Aushebegeräts 201 in der dritten Ausgestaltung insbesondere in der Ausbildung der Zustellantriebe für die Unterschneidemesser 20, 30, 320, 330 sowie die Unterschneidemesser 20, 30, 320, 330 selbst.

Die Antriebsvorrichtungen 350, 360 weisen gegenüber dem Wurzelballen-Unterschneide- und Aushebegerät 201 in der dritten Ausgestaltung jeweils einen Motor 359, 369, der auf der Kettenführung 352, 362 und damit auf dem bogenförmigen Führungslager 4 gelagert ist, auf. Mittels der Motoren 359, 369 sind jeweiligen Rollenketten 251, 261 separat voneinander und somit unabhängig vom zentralen Motor 42 am Rahmen 2 antreibbar. Hierdurch erfolgt eine antriebsseitige Funktionstrennung für die rotative Bewegung des Messerträgers einerseits und der Zustellung der Unterschneidemesser 20, 30, 320, 330 entlang der Führungsbahn Y, Y' andererseits. Um den Messerträger 10, insbesondere während der Aufwärtsbewegung der Unterschneidemesser 20, 30, 320, 330 zu fixieren oder festzusetzen, ist im bogenförmigen Führungslager 4 wenigstens ein nicht dargestelltes Bremselement angeordnet.

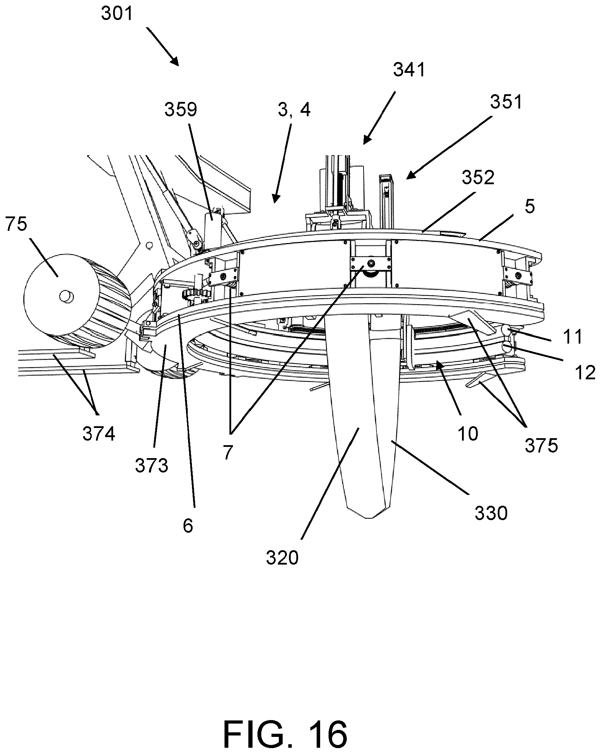

Wie der Figur 16 zu entnehmen ist, weist die unterhalb der Bodenplatte 6 angeordnete Stützplatte 373 eine Mehrzahl von schräg angestellten Ankerblechen 375 auf, welche kreisbogenförmig angeordnet und ausgerichtet sind. Diese Ankerbleche 375 graben sich beim Absenken in den Boden ein und verhindern ein Verdrehen des Wurzelballen-Unterschneide- und Aushebegeräts 301 während der Rotation des Messerträgers 10, wobei die Ankerbleche 375 im Ausführungsbeispiel derart ausgerichtet sind, dass ihre Wirkung insbesondere bei Rotation des Messerträgers 10 entgegen des Uhrzeigersinns (in der Draufsicht gemäß Fig. 14 und 15 zum Tragen kommt.

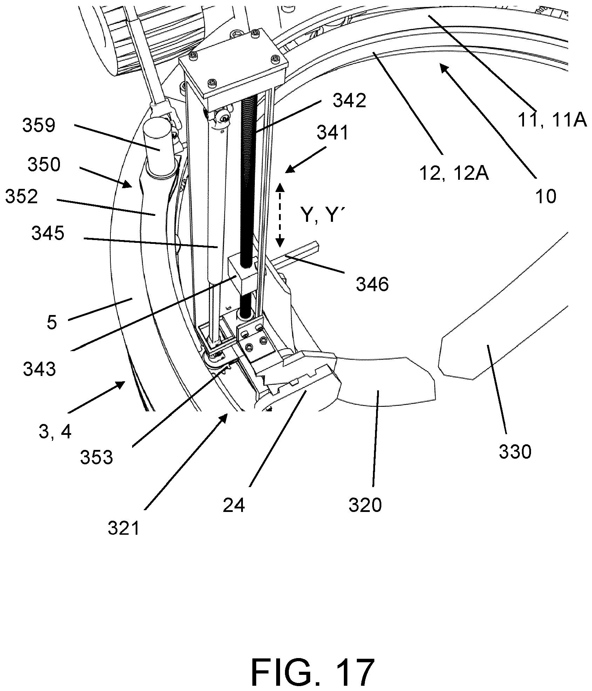

Die Figur 17 zeigt eine perspektivische Teilansicht einer Seite der Bogenführung 3 mit dem Führungslager 4 und dem Messerträger 10 sowie die an dem Messerträger 10 angeordnete Messerführung 321. Wie der Figur 17 zu entnehmen ist, ist eine als Spindelantrieb 341 ausgebildete Unterschneidemesser-Verstelleinrichtung für das im Wesentlichen vertikalen Bewegen des Unterschneidemessers 320 entlang der Führungsbahn Y, Y' vorgesehen. Der Spindelantrieb 341 umfasst neben einer Spindel 342 eine Welle 345 und eine Spindelmutter 343, an der ein Mitnehmer 346 angeordnet ist. Der Mitnehmer 346 ist durch eine Öffnung im dem Unterschneidemesser 320 geführt, sodass dieses sich bei Rotation der Spindel 342 je nach Drehrichtung entlang der Führungsbahn Y, Y' abwärts oder aufwärts bewegt. Der Antrieb der Spindel 342 erfolgt auf der dargestellten rechten Seite der Bogenführung 3 bzw. des bogenförmigen Führungslagers 4 durch den Motor 359, der die in der Kettenführung 352 laufende Rollenkette 251 treibt, welche wiederum ein auf der Messerführung 321 gelagertes Kettenritzel 353 treibt, das über die Welle 345 schließlich die Spindel 342 antreibt bzw. dreht. Der Mitnehmer 346 ist im vorliegenden Ausführungsbeispiel als Stift ausgebildet. Der Mitnehmer 346 kann jedoch auch zapfen-, bolzen-, schwert- oder hakenförmig ausgebildet sein.

Wie die Figur 18 erkennen lässt, sind an dem Rahmen 2 zwei schwenk- und arretierbare Fußrasten 374 gelagert, welche in diesem Ausführungsbeispiel an ihrem Ende abgewinkelt und spitz ausgeführt sind, sodass diese bei Belastung in das Erdreich eindringen und somit das Wurzelballen-Unterschneide- und Aushebegeräts 301 fixieren können.

Am Beispiel der vierten Ausgestaltung des Wurzelballen-Unterschneide- und Aushebegeräts 301 gemäß den Figuren 14 bis 18 wird nachstehend die Betriebsweise des Wurzelballen-Unterschneide- und Aushebegeräts beschrieben. Nach dem Anfahren der Pflanze wird die Ballengröße über das Bedienpult 51 ausgewählt und die Messerführung 21, 31, 221,231, 321, 331 mittels der Adaptereinheit 22, 32 eingestellt. Anschließend wird die verstellbare Stützplatte 73, 373 soweit wie erforderlich abgesenkt und durch die Ankerbleche 375 im Boden fixiert. Dabei werden die Spitzen bzw. die vordere Kante der Unterschneidemesser 20, 30, 320 330 durch das Eigengewicht des Wurzelballen-Unterschneide- und Aushebegeräts 1, 101, 201, 301 in den Boden gedrückt. Der von der Größe des auszuschneidenden Wurzelballens abhängige, nicht ausgefahrene Teil der Unterschneidemesser 20, 30, 320, 330 befindet sich zu diesem Zeitpunkt noch oberhalb des Erdreichs.

Der Unterschneidevorgang der Unterschneidemesser 20, 30, 320 330 beginnt, wobei der Messerträger 10 in der Draufsicht im oder entgegen dem Uhrzeigersinn um die vertikale Drehachse A, mit anderen Worten um den Pflanzenmittelpunkt für mindestens eine halbe Umdrehung (180°) in einem ersten Schritt rotiert. Unter Berücksichtigung der Art des Erdreichs bzw. des "Bodentyps" werden die Unterschneidemesser 20, 30, 320 330 sukzessiv innerhalb des Wirkbereichs der Rollenketten 251, 261 kontinuierlich bei drehendem Messerträger 10 oder stationär bei stehendem Messerträger 10 an einem definierten Arbeitspunkt im Wirkbereich der Rollenketten 251, 261 mittels der Antriebsvorrichtungen 250, 260, 350, 360 bzw. der sogenannten Ketten-Vortriebseinheiten mit einer definierten Geschwindigkeit entlang der Führungsbahn Y, Y' in den Boden getrieben, wobei sich die Geschwindigkeit und Tiefe über separaten Antriebe mit den Motoren 359, 369 steuern lässt.

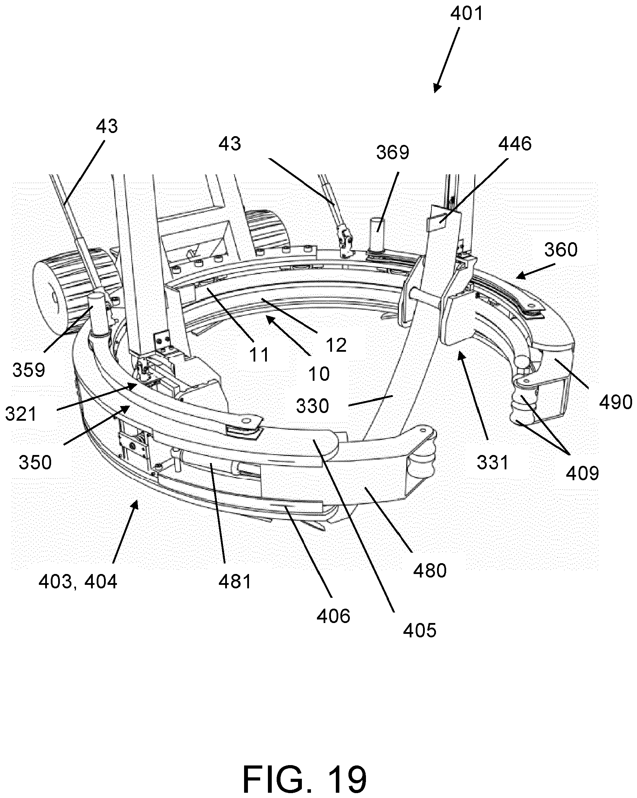

Eine fünfte Ausgestaltung eines Wurzelballen-Unterschneide- und Aushebegeräts 401 gemäß der Erfindung zeigt die Figur 19. Hierbei handelt es sich um eine Weiterbildung der vierten Ausgestaltung gemäß den Figuren 14 bis 18, wobei die für die fünfte Ausgestaltung spezifischen Elemente mit 4xx gekennzeichnet sind. Das Wurzelballen-Unterschneide- und Aushebegeräts 401 weist wiederum zwei sich diametral gegenüberliegende bogenförmige Unterschneidemesser 320, 330 auf. Wie die Fig. 19 erkennen lässt, sind die Unterschneidemesser 320, 330 ebenfalls in Messerführungen 321, 331 an dem rotierbaren bogenförmigen Messerträger 10 und an den bogenförmigen Führungsprofilen 11, 12 angeordnet, welche innenseitig an dem bogenförmigen Führungslager 404 beweglich gelagert sind. Der rotierbare bogenförmige Messerträger 10 mit den bogenförmigen Führungsprofilen 11, 12 und das bogenförmigen Führungslager 404 bilden zusammen wiederum die Bogenführung 403. Das Wurzelballen-Unterschneide- und Aushebegeräts 401 in der fünften Ausgestaltung unterscheidet sich gegenüber dem Wurzelballen-Unterschneide- und Aushebegeräts 301 in der vierten Ausgestaltung durch zwei zusätzliche teleskopierbare Bogenstücke 480, 490, welche jeweils an den freien Enden des bogenförmigen Führungslagers 404 zwischen der Deckplatte 405 und der Bodenplatte 406 beweglich gelagert sind. Zum Ein- und Ausfahren der teleskopierbaren Bogenstücke 480, 490 ist jeweils ein Stellzylinder 481 vorgesehen, der im Führungslager 404 gelagert ist. Die Ausbildung der Zustellantriebe für die Unterschneidemesser 20, 30, 320, 330 sowie die Unterschneidemesser 20, 30, 320, 330 sind im Wesentlichen gleich der vierten Ausgestaltung, lediglich der Mitnehmer 446 ist abweichend schwertartig ausgebildet. Die Antriebsvorrichtungen 350, 360 weisen ebenfalls jeweils einen Motor 359, 369 auf, der auf der Kettenführung 352, 362 und damit auf dem bogenförmigen Führungslager 404 gelagert ist.

### Bezugsziffernliste:

- 1, 101: Wurzelballen-Unterschneide- und Aushebegerät
- 2: Rahmen
- 3, 103: Bogenführung
- 4, 104: Führungslager
- 5: Deckplatte
- 6: Bodenplatte
- 7: Rollenlager
- 8: Druckfeder
- 9: Nutrolle
- 10: Messerträger
- 11: Führungsprofil
- 11A: Lauffläche
- 12: Führungsprofil
- 12A: Lauffläche
- 13: Antriebselement
- 13A: Zahnstange
- 13B: Zahnkranzsegment
- 14: Nut
- 15: Abdeckung
- 16: Steg
- 17: Blech
- 19: Durchbrüche
- 20, 120: Unterschneidemesser
- 21, 121: Messerführung
- 22, 32: Adaptereinheit
- 23, 33: Messerlager
- 24, 34: Wange
- 25, 35: Halteelement
- 26, 36: Lagerplatte
- 27, 37: Führungsrolle
- 28, 38: Führungsrolle
- 29, 39: Antriebsritzel
- 30, 130: Unterschneidemesser
- 31, 131: Messerführung
- 40: Getriebekasten
- 41: Getriebe
- 42: Motor
- 42e: Elektromotor
- 43: Gelenkwelle
- 44: Batterieeinheit
- 49: Motor
- 49e: Elektromotor
- 51: Bedienpult
- 52: Handgriff
- 53: Bedienhebel
- 71, 72: Stütze
- 71e, 72e: Elektrozylinder
- 73: Stützplatte
- 74: Fußraste
- 75: Rad
- 76: Achse
- 77: Fahrmotor
- 201: Wurzelballen-Unterschneide- und Aushebegerät
- 221: Messerführung
- 229: Antriebsrolle
- 231: Messerführung
- 241: Schneckengetriebe
- 242: Schneckenwelle
- 243: Schneckenrad
- 244: Zahnrad
- 245: Drehwinkelgeber
- 250, 260: Antriebsvorrichtung
- 251,261: Rollenkette
- 252, 262: Kettenführung
- 253: Kettenritzel
- 254: Getriebe
- 255.1, 255.2: Zahnrad
- 256: Zahnrad
- 257: Getriebewelle
- 258: Getriebewelle
- 259: Kupplung
- 301: Wurzelballen-Unterschneide- und Aushebegerät
- 320: Unterschneidemesser
- 321: Messerführung
- 330: Unterschneidemesser
- 331: Messerführung
- 341,351: Spindelantrieb
- 342: Spindel
- 343: Spindelmutter
- 344: Zahnrad
- 345: Welle
- 346: Mitnehmer
- 350, 360: Antriebsvorrichtung
- 352, 362: Kettenführung
- 353: Kettenritzel
- 359, 369: Motor
- 373: Stützplatte
- 374: Fußraste
- 375: Ankerblech
- 401: Wurzelballen-Unterschneide- und Aushebegerät
- 403: Bogenführung
- 404: Führungslager
- 405: Deckplatte
- 406: Bodenplatte
- 409: Nutrolle
- 446: Mitnehmer
- 480,490: Bogenstück
- 481: Stellzylinder
- A: Drehachse
- B, B': Achse
- C, C': Schwenkachse
- X: Linearachse
- Y, Y': Führungsbahn
- d₁: mittlerer Durchmesser des Führungslagers
- d₂: mittlerer Durchmesser des Messerträgers

## Patentansprüche

1. Wurzelballen-Unterschneide- und Aushebegerät (1, 101, 201, 301, 401) mit einer Bogenführung (3, 103, 403), die ein bogenförmiges Führungslager (4, 104, 404) und einen, mittels eines an der Bogenführung (3, 103, 403) gehalterten Motors (42) um eine Drehachse A rotierbaren, bogenförmigen Messerträger (10) umfasst, an dem zwei Messerführungen (21, 31, 121, 131, 221, 231, 321, 331) diametral entgegengesetzt gehaltert sind, in denen jeweils ein in seiner Längserstreckung bogenförmiges Unterschneidemesser (20, 30, 120, 130, 320, 330) bewegbar gelagert ist, **dadurch gekennzeichnet, dass** das bogenförmige Führungslager (4, 104, 404) und der bogenförmige Messerträger (10) sich jeweils über einen Bogenwinkel im Bereich von 240° bis maximal 340° erstrecken und somit eine Öffnung am Umfang im Bereich von 120° bis 20° aufweisen, wobei der bogenförmige Messerträger (10) seitlich an dem bogenförmigen Führungslager (4, 104, 404) bewegbar in Nutrollen (9, 409) gelagert ist, und dass der bogenförmigen Messerträger (10) ein bogenförmiges Antriebselement (13) und wenigsten ein bogenförmiges Führungsprofil (11, 12) mit einer, zum bogenförmigen Führungslager (4, 104) weisenden, konvexen Lauffläche (11A, 12A) umfasst, wobei das bogenförmige Führungsprofil (11, 12) derart mit den Nutrollen (9, 409) in Eingriff bringbar ist, dass der bogenförmige Messerträger (10) um die im Wesentlichen vertikalen Drehachse A rotierbar und die Öffnung am Umfang des bogenförmigen Führungslagers (4, 104, 404) durch den bogenförmigen Messerträger (10) verschließbar ist.

2. Gerät nach Anspruch 1, **dadurch gekennzeichnet, dass** das bogenförmige Führungslager (4, 104, 404) eine Mehrzahl von satzweise, insbesondere paarweise übereinander angeordneten Nutrollen (9, 409) umfasst, die am Umfang eine konkave, v- oder trapezförmige Nut aufweisen und dass der bogenförmigen Messerträger (10) wenigsten zwei übereinander angeordnete bogenförmige Führungsprofile (11, 12) umfasst, die eine konvexe Lauffläche (11A, 12A) am Umfang aufweisen, wobei das obere Führungsprofil (11) mit den oberen Nutrollen (9, 409) und das untere Führungsprofil (12) mit den unteren Nutrollen (9, 409) in Eingriff bringbar ist.

3. Gerät nach Anspruch 1 oder 2, **dadurch gekennzeichnet, dass** die Nutrollen (9, 409) quer zu ihrer Drehachse radial bewegbar, insbesondere federnd in dem bogenförmigen Führungslager (4, 104, 404) in einem Rollenlager (7) zwischen einer kreisringsegmentförmigen Deckplatte (5, 405) und einer kreisringsegmentförmigen Bodenplatte (6, 406) gelagert sind.

4. Gerät nach Anspruch 2 oder 3, **dadurch gekennzeichnet, dass** an der Bogenführung (3, 103, 403) der Motor (42) und eine Getriebeanordnung zum Antreiben des Messerträgers (10) gehaltert sind, wobei die Getriebeanordnung wenigstens zwei Zahnräder aufweist, die achsparallel in einer horizontalen Ebene in dem bogenförmigen Führungslager (4, 104, 404) derart beabstandet gelagert sind, dass das an dem Messerträger (10) angeordnete bogenförmige Antriebselement (13) stets mit mindestens einem der Zahnräder in Eingriff bringbar ist.

5. Gerät nach einem der vorangegangen Ansprüche, **dadurch gekennzeichnet, dass** die oder jede Messerführung (21, 31, 221, 231, 321, 331) eine Adaptereinheit (22, 32) und ein Messerlager (23, 33) für ein bogenförmiges Unterschneidemesser (20, 30, 120, 130, 320, 330) umfasst, wobei das Messerlager (23, 33) lösbar in der Adaptereinheit (22, 32) gelagert ist und die Adaptereinheit (22, 32) am bogenförmigen Messerträger (10) radial nach innen zur Drehachse A gerichtet angeordnet ist.

6. Gerät nach einem der vorangegangen Ansprüche, **dadurch gekennzeichnet, dass** an dem bogenförmigen Führungslager (4, 104, 404) zum Einstellen eines vorbestimmten Abstands zur Geländeoberfläche, wenigstens eine, an längenveränderbaren Stützen (71, 72) gehalterte, insbesondere kreisringsegmentförmige Stützplatte (73, 373) angeordnet ist.

7. Gerät nach einem der vorangegangen Ansprüche, **dadurch gekennzeichnet, dass** das Wurzelballen-Unterschneide- und Aushebegerät (1, 101, 201, 301, 401) ein Fahrwerk mit wenigsten zwei Rädern (75) oder Ketten umfasst, welche bevorzugt durch einen Fahrmotor (77) antreibbar sind.

8. Gerät nach Anspruch 7, **dadurch gekennzeichnet, dass** das Wurzelballen-Unterschneide- und Aushebegerät (1, 101, 201, 301, 401) einen Rahmen (2) umfasst, an dem Handgriffe (52) für ein manuelles Bewegen des Wurzelballen-Unterschneide- und Aushebegeräts (1, 101) angeordnet sind und/oder dass das Wurzelballen-Unterschneide- und Aushebegerät (1, 101, 301, 401) eine Deichsel zum Ankoppeln an ein Zugfahrzeug aufweist.

9. Gerät nach einem der vorangegangen Ansprüche, **dadurch gekennzeichnet, dass** das Wurzelballen-Unterschneide- und Aushebegerät (1, 101, 201, 301, 401) einen Rahmen (2) umfasst, an welchen ein Koppelelement für eine lösbare mechanische Kopplung sowie wenigstens eine Steckverbindung für eine elektrische und/oder hydraulische Kopplung mit einem Trägerfahrzeug angeordnet sind.

10. Gerät nach einem der vorangegangen Ansprüche, **dadurch gekennzeichnet, dass** an dem bogenförmigen Führungslager (4, 104, 404) wenigsten eine Antriebsvorrichtung (250, 260, 350, 360) angeordnet ist, wobei vorzugsweise die Antriebsvorrichtung (250, 260, 350, 360) eine in einer bogenförmigen Kettenführung (251, 261, 351, 361) geführte Rollenkette (251, 261) und ein eingangsseitiges Getriebe (254) und/oder einen eingangsseitigen, insbesondere direkt gekoppelten Motor (359, 369) umfasst.

11. Gerät nach Anspruch 10, **dadurch gekennzeichnet, dass** der Antriebsvorrichtung (250, 260, 350, 360) nachgeordnet ein an jeder Messerführung (21, 31, 221, 231, 321, 331) gehaltener Stellantrieb zum Bewegen und/oder Positionieren des bogenförmigen Unterschneidemessers (20, 30, 320, 330) entlang einer Führungsbahn Y, Y' angeordnet ist, wobei vorzugsweise die Führungsbahn Y, Y' in einem spitzen Winkel zur Drehachse A verläuft.

12. Gerät nach Anspruch 11, **dadurch gekennzeichnet, dass** der Stellantrieb ein Kettenritzel (253) und ein mit dem Kettenritzel (253) wirkverbundenes Schneckengetriebe (241) umfasst, welches eine Schneckenwelle (242) und ein Schneckenrad (243) aufweist, wobei vorzugsweise das Schneckenrad (243) zum direkten Eingriff oder mittels eines nachgeordneten Antriebsritzel zum mittelbaren Eingriff in gleichmäßig beabstandete Durchbrüche (19) eines Unterschneidemesser (20, 30) ausgebildet und eingerichtet ist.

13. Gerät nach Anspruch 11, **dadurch gekennzeichnet, dass** der Stellantrieb ein Kettenritzel (253) und einen mit dem Kettenritzel (253) wirkverbundenen Spindelantrieb (341) umfasst, welcher eine Spindel (342) und ein Spindelmutter (343) aufweist, wobei vorzugsweise an der Spindelmutter (343) ein Mitnehmer (346, 446) zum Herstellen einer Wirkverbindung mit einem Unterschneidemesser (320, 330) angeordnet ist.

14. Gerät nach Anspruch 12 oder 13, **dadurch gekennzeichnet, dass** jedes Unterschneidemesser (20, 30, 320, 330) ein Antriebselement zum Herstellen einer Wirkverbindung mit dem Stellantrieb aufweist, wobei vorzugsweise das Antriebselement als eine Mehrzahl gleichmäßig beabstandeter Durchbrüche (19), Vertiefungen oder Erhebungen zum Herstellen der Wirkverbindung mit dem Schneckenrad (243) oder als Bohrung, Ausschnitt, Rezess oder Vorsprung zum Herstellen einer Wirkverbindung mit dem Mitnehmer (346, 446) ausgebildet und eingerichtet ist.

15. Gerät nach einem der vorangegangen Ansprüche, **dadurch gekennzeichnet, dass** das bogenförmigen Führungslager (4, 104, 404) wenigstens ein teleskopierbares Bogenstück (480, 490) aufweist, in dem mindestens eine Nutrolle (409) zum Stützen des Messerträgers (10) gelagert ist.

## Claims

1. Root ball undercutting and excavation device (1, 101, 201, 301, 401) comprising a curved guide (3, 103, 403) which has a curved guide bearing (4, 104, 404) and a curved blade carrier (10) which can be rotated about an axis of rotation A by means of a motor (42) held on the curved guide (3, 103, 403), and on which two blade guides (21, 31, 121, 131, 221, 231, 321, 331) are held diametrically opposite one another, in each of which an undercutting blade (20, 30, 120, 130, 320, 330) which is curved in the longitudinal extension thereof is movably mounted, **characterised in that** the curved guide bearing (4, 104, 404) and the curved blade carrier (10) each extend over an arcuate angle in the range of 240° to at most 340° and thus have an opening on the circumference in the range of 120° to 20°, the curved knife carrier (10) being mounted in grooved rollers (9, 409) so as to be laterally movable on the curved guide bearing (4, 104, 404), and **in that** the curved blade carrier (10) comprises a curved drive element (13) and at least one curved guide profile (11, 12) having a convex running surface (11A, 12A) facing the curved guide bearing (4, 104), it being possible for the curved guide profile (11, 12) to be brought into engagement with the grooved rollers (9, 409) such that the curved blade carrier (10) is rotatable about the substantially vertical axis of rotation A and the opening on the circumference of the curved guide bearing (4, 104, 404) can be closed by the curved blade carrier (10).

2. Device according to claim 1, **characterised in that** the curved guide bearing (4, 104, 404) comprises a plurality of grooved rollers (9, 409) which are arranged in sets, in particular in pairs, above one another and which have a concave, V-shaped or trapezoidal groove on the circumference, and **in that** the curved blade carrier (10) comprises at least two curved guide profiles (11, 12) which are arranged above one another and have a convex running surface (11A, 12A) on the circumference, it being possible for the upper guide profile (11) to be brought into engagement with the upper grooved rollers (9, 409) and for the lower guide profile (12) to be brought into engagement with the lower grooved rollers (9, 409).

3. Device according to either claim 1 or claim 2, **characterised in that** the grooved rollers (9, 409) are mounted so as to be radially movable transversely to the axis of rotation thereof, in particular resiliently mounted in the curved guide bearing (4, 104, 404) in a roller bearing (7) between a circular ring segment-shaped cover plate (5, 405) and a circular ring segment-shaped base plate (6, 406).

4. Device according to either claim 2 or claim 3, **characterised in that** the motor (42) and a transmission assembly for driving the blade carrier (10) are held on the curved guide (3, 103, 403), the transmission assembly having at least two gear wheels which are mounted axially parallel in a horizontal plane in the curved guide bearing (4, 104, 404) so as to be spaced apart in such a way that the curved drive element (13) arranged on the blade carrier (10) can always be brought into engagement with at least one of the gear wheels.

5. Device according to any of the preceding claims, **characterised in that** the or each blade guide (21, 31, 221, 231, 321, 331) comprises an adapter unit (22, 32) and a blade bearing (23, 33) for a curved undercutting knife (20, 30, 120, 130, 320, 330), the blade bearing (23, 33) being detachably mounted in the adapter unit (22, 32) and the adapter unit (22, 32) being arranged on the curved blade carrier (10) so as to be directed radially inwards towards the axis of rotation A.

6. Device according to any of the preceding claims, **characterised in that** at least one in particular circular ring segment-shaped support plate (73, 373) held on length-adjustable supports (71, 72) is arranged on the curved guide bearing (4, 104, 404) for setting a predetermined distance to a ground surface.

7. Device according to any of the preceding claims, **characterised in that** the root ball undercutting and excavation device (1, 101, 201, 301, 401) comprises a chassis having at least two wheels (75) or chains which can preferably be driven by a travel motor (77).

8. Device according to claim 7, **characterised in that** the root ball undercutting and excavation device (1, 101, 201, 301, 401) comprises a frame (2) on which handles (52) for manually moving the root ball undercutting and excavation device (1, 101) are arranged, and/or **in that** the root ball undercutting and excavation device (1, 101, 301, 401) has a drawbar for coupling to a towing vehicle.

9. Device according to any of the preceding claims, **characterised in that** the root ball undercutting and lifting device (1, 101, 201, 301, 401) comprises a frame (2) on which a coupling element for a releasable mechanical coupling and at least one plug connection for an electrical and/or hydraulic coupling to a carrier vehicle are arranged.

10. Device according to any of the preceding claims, **characterised in that** at least one drive apparatus (250, 260, 350, 360) is arranged on the curved guide bearing (4, 104, 404), the drive apparatus (250, 260, 350, 360) preferably comprising a roller chain (251, 261) guided in a curved chain guide (251, 261, 351, 361) and an input-side transmission (254) and/or an input-side, in particular directly coupled motor (359, 369).

11. Device according to claim 10, **characterised in that** an actuator (250, 260, 350, 360) held on each blade guide (21, 31, 221, 231, 321, 331) is arranged downstream of the drive apparatus for moving and/or positioning the curved undercutting knife (20, 30, 320, 330) along a guide path Y, Y', the guide path Y, Y' preferably extending at an acute angle to the axis of rotation A.

12. Device according to claim 11, **characterised in that** the actuator comprises a chain pinion (253) and a worm gear (241) which is operatively connected to the chain pinion (253) and has a worm shaft (242) and a worm wheel (243), the worm wheel (243) preferably being designed and configured for direct engagement or, by means of a downstream drive pinion, for indirect engagement in uniformly spaced openings (19) of an undercutting knife (20, 30).

13. Device according to claim 11, **characterised in that** the actuator comprises a chain pinion (253) and a spindle drive (341) which is operatively connected to the chain pinion (253) and has a spindle (342) and a spindle nut (343), a driver (346, 446) for producing an operative connection with an undercutting blade (320, 330) preferably being arranged on the spindle nut (343).

14. Device according to either claim 12 or claim 13, **characterised in that** each undercutting knife (20, 30, 320, 330) has a drive element for establishing an operative connection with the actuator, the drive element preferably being designed and configured as a plurality of uniformly spaced openings (19), depressions or elevations for establishing the operative connection with the worm wheel (243), or as a bore, cutout, recess or projection for establishing an operative connection with the driver (346, 446).

15. Device according to any of the preceding claims, **characterised in that** the curved guide bearing (4, 104, 404) has at least one telescoping curved piece (480, 490) in which at least one grooved roller (409) is mounted for supporting the blade carrier (10).

## Revendications

1. Appareil de coupe sous-jacente et d'arrachage de mottes racinaires (1, 101, 201, 301, 401) avec un guide en arc (3, 103, 403) qui comprend un palier de guidage (4, 104, 404) en forme d'arc et un porte-lames (10) en forme d'arc pouvant tourner autour d'un axe de rotation A au moyen d'un moteur (42) maintenu sur le guide en arc (3, 103, 403), sur lequel deux guide-lame (21, 31, 121, 131, 221, 231, 321, 331) sont maintenus de manière diamétralement opposée, dans chacun desquels une lame de coupe sous-jacente (20, 30, 120, 130, 320, 330) en forme d'arc dans son extension longitudinale est montée de manière mobile, **caractérisé en ce que** le palier de guidage (4, 104, 404) en forme d'arc et le porte-lames (10) en forme d'arc s'étendent chacun sur un angle d'arc dans la plage de 240° à 340° maximum et présentent ainsi une ouverture à la périphérie dans la plage de 120° à 20°, le porte-lames (10) en forme d'arc étant monté latéralement sur le palier de guidage (4, 104, 404) en forme d'arc de manière mobile dans des galets rainurés (9, 409), et **en ce que** le porte-lames (10) en forme d'arc comprend un élément d'entraînement (13) en forme d'arc et au moins un profilé de guidage (11, 12) en forme d'arc avec une surface de roulement convexe (11A, 12A) orientée vers le palier de guidage (4, 104) en forme d'arc, le profilé de guidage (11, 12) en forme d'arc pouvant être mis en prise avec les galets rainurés (9, 409) de telle sorte que le porte-lames (10) en forme d'arc puisse tourner autour de l'axe de rotation A sensiblement vertical et que l'ouverture à la périphérie du palier de guidage (4, 104, 404) en forme d'arc puisse être fermée par le porte-lames (10) en forme d'arc.

2. Appareil selon la revendication 1, **caractérisé en ce que** le palier de guidage (4, 104, 404) en forme d'arc comprend une pluralité de galets rainurés (9, 409) superposés par jeux, en particulier par paires, qui présentent à la périphérie une rainure concave, en forme de V ou trapézoïdale, et **en ce que** le porte-lames (10) en forme d'arc comprend au moins deux profilés de guidage (11, 12) en forme d'arc superposés, qui présentent une surface de roulement convexe (11A, 12A) à la périphérie, le profilé de guidage (11) supérieur pouvant être mis en prise avec les galets rainurés (9, 409) supérieurs et le profilé de guidage (12) inférieur pouvant être mis en prise avec les galets rainurés (9, 409) inférieurs.

3. Appareil selon la revendication 1 ou 2, **caractérisé en ce que** les galets rainurés (9, 409) sont montés de manière mobile radialement transversalement à leur axe de rotation, en particulier de manière élastique dans le palier de guidage (4, 104, 404) en forme d'arc dans un palier à rouleaux (7) entre une plaque supérieure (5, 405) en forme de segment d'anneau de cercle et une plaque inférieure (6, 406) en forme de segment d'anneau de cercle.

4. Appareil selon la revendication 2 ou 3, **caractérisé en ce que** le moteur (42) et un agencement de transmission pour l'entraînement du porte-lames (10) sont maintenus sur le guide en arc (3, 103, 403), l'agencement de transmission présentant au moins deux roues dentées qui sont montées de manière axialement parallèle dans un plan horizontal dans le palier de guidage (4, 104, 404) en forme d'arc en étant espacées de telle sorte que l'élément d'entraînement (13) en forme d'arc disposé sur le porte-lames (10) peut toujours être mis en prise avec au moins l'une des roues dentées.

5. Appareil selon l'une des revendications précédentes, **caractérisé en ce que** le ou chaque guide-lame (21, 31, 221, 231, 321, 331) comprend une unité d'adaptation (22, 32) et un palier de lame (23, 33) pour une lame de coupe sous-jacente (20, 30, 120, 130, 320, 330) en forme d'arc, le palier de lame (23, 33) étant monté de manière amovible dans l'unité d'adaptation (22, 32) et l'unité d'adaptation (22, 32) étant disposée sur le porte-lames (10) en forme d'arc radialement vers l'intérieur par rapport à l'axe de rotation A.

6. Appareil selon l'une des revendications précédentes, **caractérisé en ce qu'**au moins une plaque de support (73, 373), en particulier en forme de segment d'anneau de cercle, maintenue sur des supports (71, 72) de longueur variable, est disposée sur le palier de guidage (4, 104, 404) en forme d'arc pour régler une distance prédéterminée par rapport à la surface du terrain.

7. Appareil selon l'une des revendications précédentes, **caractérisé en ce que** l'appareil de coupe sous-jacente et d'arrachage de mottes racinaires (1, 101, 201, 301, 401) comprend un châssis avec au moins deux roues (75) ou chaînes, qui peuvent de préférence être entraînées par un moteur de traction (77).

8. Appareil selon la revendication 7, **caractérisé en ce que** l'appareil de coupe sous-jacente et d'arrachage de mottes racinaires (1, 101, 201, 301, 401) comprend un châssis (2) sur lequel sont disposées des poignées (52) pour un déplacement manuel de l'appareil de coupe sous-jacente et d'arrachage de mottes racinaires (1, 101) et/ou **en ce que** l'appareil de coupe sous-jacente et d'arrachage de mottes racinaires (1, 101, 301, 401) présente un timon pour l'accouplement à un véhicule tracteur.

9. Appareil selon l'une des revendications précédentes, **caractérisé en ce que** l'appareil de coupe sous-jacente et d'arrachage de mottes racinaires (1, 101, 201, 301, 401) comprend un châssis (2) sur lequel sont disposés un élément d'accouplement pour un accouplement mécanique amovible ainsi qu'au moins une connexion enfichable pour un accouplement électrique et/ou hydraulique à un véhicule porteur.

10. Appareil selon l'une des revendications précédentes, **caractérisé en ce qu'**au moins un dispositif d'entraînement (250, 260, 350, 360) est disposé sur le palier de guidage (4, 104, 404) en forme d'arc, le dispositif d'entraînement (250, 260, 350, 360) comprenant de préférence une chaîne à rouleaux (251, 261) guidée dans un guide-chaîne (251, 261, 351, 361) en forme d'arc et une transmission (254) côté entrée et/ou un moteur (359, 369) côté entrée, en particulier à accouplement direct.

11. Appareil selon la revendication 10, **caractérisé en ce qu'**en aval du dispositif d'entraînement (250, 260, 350, 360) est disposé un entraînement de positionnement maintenu sur chaque guide-lame (21, 31, 221, 231, 321, 331) pour déplacer et/ou positionner la lame de coupe sous-jacente (20, 30, 320, 330) en forme d'arc le long d'une trajectoire de guidage Y, Y', la trajectoire de guidage Y, Y' s'étendant selon un angle aigu par rapport à l'axe de rotation A.

12. Appareil selon la revendication 11, **caractérisé en ce que** l'entraînement de positionnement comprend un pignon à chaîne (253) et une transmission à vis sans fin (241) reliée de manière fonctionnelle au pignon à chaîne (253), laquelle présente un arbre à vis sans fin (242) et une roue à vis sans fin (243), la roue à vis sans fin (243) étant de préférence réalisée et conçue pour l'engrènement direct ou, au moyen d'un pignon d'entraînement disposé en aval, pour l'engrènement indirect dans des ouvertures (19) régulièrement espacées d'une lame de coupe sous-jacente (20, 30).

13. Appareil selon la revendication 11, **caractérisé en ce que** l'entraînement de positionnement comprend un pignon à chaîne (253) et un entraînement à broche (341) relié de manière fonctionnelle au pignon à chaîne (253), lequel présente une broche (342) et un écrou de broche (343), un entraîneur (346, 446) étant de préférence disposé sur l'écrou de broche (343) pour établir une liaison fonctionnelle avec une lame de coupe sous-jacente (320, 330).

14. Appareil selon la revendication 12 ou 13, **caractérisé en ce que** chaque lame de coupe sous-jacente (20, 30, 320, 330) présente un élément d'entraînement pour établir une liaison fonctionnelle avec l'entraînement de positionnement, l'élément d'entraînement étant de préférence réalisé et conçu sous la forme d'une pluralité d'ouvertures (19), de creux ou de bosses régulièrement espacés pour établir la liaison fonctionnelle avec la roue à vis sans fin (243) ou sous la forme d'un alésage, d'une découpe, d'un évidement ou d'une saillie pour établir une liaison fonctionnelle avec l'entraîneur (346, 446).

15. Appareil selon l'une des revendications précédentes, **caractérisé en ce que** le palier de guidage (4, 104, 404) en forme d'arc présente au moins une pièce en arc télescopique (480, 490) dans laquelle est monté au moins un galet rainuré (409) destiné à supporter le porte-lames (10).
